# EUROPEAN PATENT APPLICATION

(11) **EP 4 513 940 A1**
(43) Date of publication of application: **26.02.2025**
(21) Application number: 23792228.1
(22) Date of filing: 21.04.2023
(51) Int. Cl.: H04W 16/28, H04B 7/0408, H04B 7/06, H04B 7/08, H04W 72/23, H04W 72/27, H04W 84/04

(54) **METHOD FOR PERFORMING COMMUNICATION BY DEVICE IN WIRELESS COMMUNICATION SYSTEM AND APPARATUS THEREFOR**

(30) Priority: 21.04.2022 KR 20220049511; 11.08.2022 KR 20220100921; 30.09.2022 KR 20220125147; 30.09.2022 KR 20220125836
(71) Applicant: LG Electronics Inc., Yeongdeungpo-gu Seoul 07336 (KR)
(72) Inventor: SHIM, Jaenam, Seoul 06772 (KR); YOU, Hyangsun, Seoul 06772 (KR); KO, Hyunsoo, Seoul 06772 (KR)
(74) Representative: Plasseraud IP
(86) International application number: PCT/KR2023/005435
(87) International publication number: WO 2023/204654

(57) **Abstract**

According to various embodiments, disclosed are a method for configuring, by a network-controlled repeater (NCR), a beam for a backhaul link for forwarding in a wireless communication system, and an apparatus therefor. Disclosed are a method and an apparatus therefor, the method comprising the steps of: reporting capability information related to beam configuration of the backhaul link to a base station through a control link; and on the basis of the reporting of the capability information, configuring a beam for the backhaul link on the basis of a predefined rule or instruction information received from the base station, wherein the instruction information includes a transmission configuration indicator (TCI) state identifier (ID) or a SRI related to the control link for configuring the beam for the backhaul link.

## Description

### [Technical Field]

Embodiments of the present disclosure relate to a method for setting (or configuring) a beam for a backhaul link required for forwarding by a network-controlled repeater (NCR) in a wireless communication system, and an apparatus for the same.

### [Background Art]

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

### [Disclosure]

### [Technical Problem]

An object of the present disclosure is to provide a method and apparatus for defining capability information on whether beam instruction for a backhaul link required for forwarding is possible, clearly predicting whether the beam for the backhaul link will operate based on the instruction, and thus guaranteeing a beam configuration (beam setting) for the backhaul link according to a clear criterion even when there is no beam instruction from a base station (BS) according to the capability information through predefined rules.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### [Technical Solutions]

In accordance with one aspect of the present disclosure, a method for configuring a beam for a backhaul link for forwarding by a network-controlled repeater (NCR) in a wireless communication system may include: reporting capability information related to beam configuration of the backhaul link to a base station (BS) through a control link; and configuring, based on a report of the capability information, a beam for the backhaul link based on either instruction information received from the base station (BS) or a predefined rule, wherein the instruction information includes a transmission configuration indicator (TCI) state identifier (ID) or a SRI related to the control link for configuring the beam for the backhaul link.

The capability information may include information about whether instruction of the beam for the backhaul link is possible.

The capability information may include information about whether a beam different from a beam for the control link can be used for the backhaul link.

Based on time resources for the backhaul link so that the instruction information is not received through the time resources that do not overlap time resources of the control link, the beam for the backhaul link may be configured based on the predefined rule.

A downlink reception beam for the backhaul link is determined based on a control resource set (CORESET) of a specific index among CORESETs related to the control link according to the predefined rule.

The specific index may be the lowest index among indices for the CORESETs.

A downlink reception beam for the backhaul link may be determined to be a beam for the control link used to receive a downlink signal in a specific search space among a plurality of search spaces related to the control link based on the predefined rule.

The beam for the backhaul link may be determined to be the same beam as a beam for the control link based on the predefined rule.

In accordance with another aspect of the present disclosure, an apparatus for use in a network-controlled repeater (NCR) that configures a beam for a backhaul link for forwarding in a wireless communication system may include: a radio frequency (RF) transceiver; and a processor connected to the RF transceiver, wherein the processor is configured to: report capability information related to beam configuration of the backhaul link to a base station (BS) through a control link, under control of the RF transceiver; and configure, based on a report of the capability information, a beam for the backhaul link based on either instruction information received from the base station (BS) or a predefined rule, wherein the instruction information includes a transmission configuration indicator (TCI) state identifier (ID) or a SRI related to the control link for configuring the beam for the backhaul link.

The capability information may include information about whether a beam for the backhaul link is configured based on the instruction information.

A downlink (DL) reception beam for the backhaul link may be set to a beam corresponding to the TCI state ID included in the instruction information among a plurality of beams for the control link based on reception of the instruction information through the report of the capability information; and an uplink transmission beam for the backhaul link may be set to a beam corresponding to the SRI included in the instruction information among a plurality of beams for the control link.

Based on time resources for the backhaul link so that the instruction information is not received through the time resources that do not overlap time resources of the control link, the beam for the backhaul link may be configured based on the predefined rule.

A downlink reception beam for the backhaul link is determined based on a control resource set (CORESET) of a specific index among CORESETs related to the control link according to the predefined rule.

In accordance with another aspect of the present disclosure, a chipset for configuring a beam for a backhaul link for forwarding in a wireless communication system may include: at least one processor; and at least one memory operatively connected to the at least one processor and configured to, when executed, cause the at least one processor to perform operations, wherein the operations include: reporting capability information related to beam configuration of the backhaul link to a base station (BS) through a control link; and configuring, based on a report of the capability information, a beam for the backhaul link based on either instruction information received from the base station (BS) or a predefined rule, wherein the instruction information includes a transmission configuration indicator (TCI) state identifier (ID) or a SRI related to the control link for configuring the beam for the backhaul link.

In accordance with another aspect of the present disclosure, a computer-readable storage medium configured to store at least one computer program in a wireless communication system, the computer-readable storage medium may include: at least one computer program for allowing at least one processor to perform operations for configuring a beam for a backhaul link for forwarding in the wireless communication system; and a computer-readable storage medium configured to store the at least one computer program, wherein the operations include: reporting capability information related to beam configuration of the backhaul link to a base station (BS) through a control link; and configuring, based on a report of the capability information, a beam for the backhaul link based on either instruction information received from the base station (BS) or a predefined rule, wherein the instruction information includes a transmission configuration indicator (TCI) state identifier (ID) or a SRI related to the control link for configuring the beam for the backhaul link.

### [Advantageous Effects]

Various embodiments may define capability information on whether beam instruction for a backhaul link required for forwarding is possible, may clearly predict whether to operate a beam for the backhaul link based on the beam instruction, and may thus guarantee a beam configuration (beam setting) for the backhaul link according to a clear criterion even when there is no beam instruction from a base station (BS) according to the capability information through predefined rules.

Effects to be achieved by embodiment(s) are not limited to what has been particularly described hereinabove and other effects not mentioned herein will be more clearly understood by persons skilled in the art to which embodiment(s) pertain from the following detailed description.

### [Description of Drawings]

The accompanying drawings, which are included to provide a further understanding of the disclosure and are incorporated in and constitute a part of this application, illustrate embodiments of the disclosure and together with the description serve to explain the principle of the disclosure.
FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 illustrates an example of mapping physical channels in a slot.
FIG. 6 illustrates an exemplary PDCCH transmission/reception process.
FIG. 7 schematically illustrates an example of a parent link and a child link.
FIG. 8 is a diagram illustrating an example of topology in which a network-controlled repeater (NCR) performs transmission and reception between the gNB and the UE.
FIG. 9 is a diagram illustrating a radio frequency (RF) repeater and an NCR.
FIG. 10 is a diagram illustrating a method in which the NCR configures a beam for a backhaul link required for forwarding.
FIG. 11 illustrates a communication system applied to the present disclosure.
FIG. 12 illustrates wireless devices applicable to the present disclosure.
FIG. 13 illustrates another example of a wireless device to which the present disclosure is applied.

### [Best Mode]

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5GNR is mainly described, but the technical spirit of the embodiment(s) is not limited thereto.

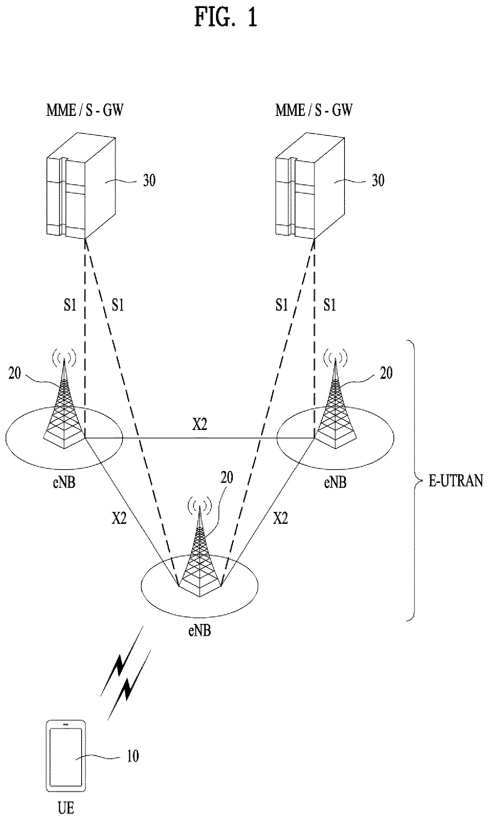

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S 1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

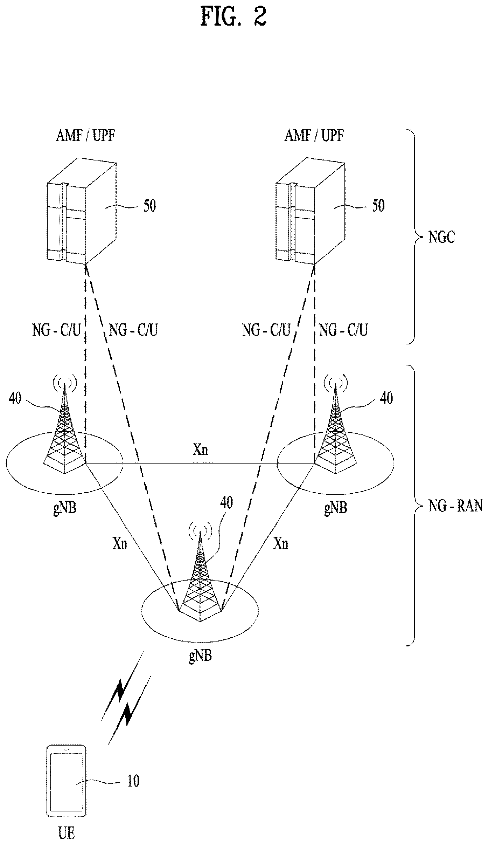

FIG. 2 illustrates the structure of a NR system to which the present disclosure is applicable.

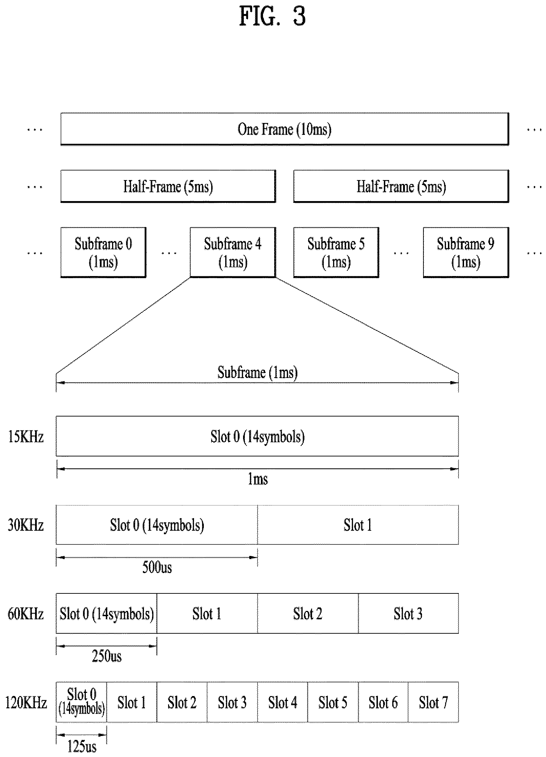

Referring to FIG. 2, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| SCS (15*2^{u}) | N^{slot} _{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

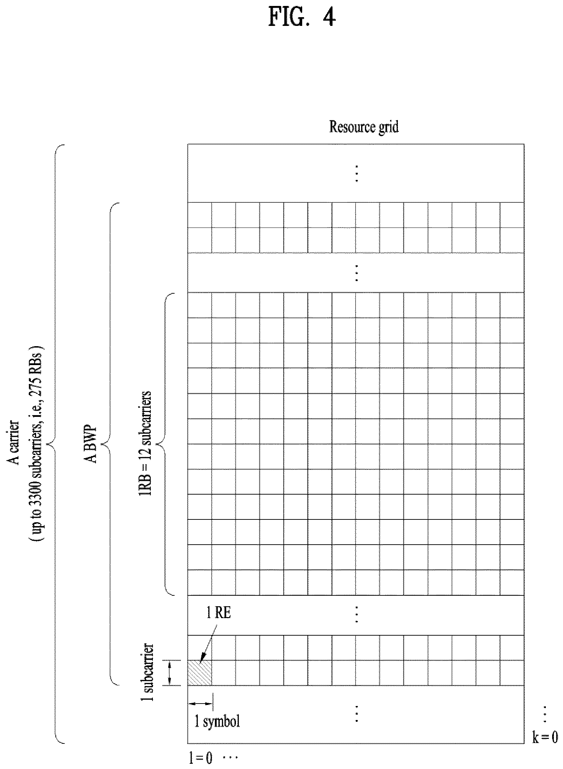

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

### Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

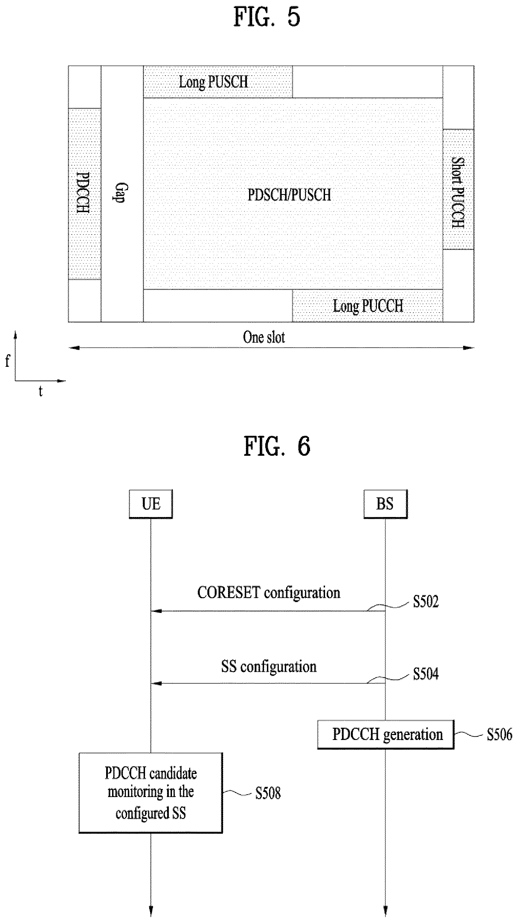

FIG. 5 illustrates an example of mapping physical channels in a slot.

A slot may include a DL control channel, DL or UL data, a UL control channel, etc., all of which are included. For example, the first N symbols in a slot may be used to transmit a DL control channel (hereinafter, referred to as a DL control region), and the last M symbols in the slot may be used to transmit a UL control channel (hereinafter, referred to as a UL control region). N and M are each integers greater than or equal to 0. A resource region (hereinafter, referred to as a data region) between the DL control region and the UL control region may be used for DL data transmission or UL data transmission. A time gap for DL-to-UL or UL-to-DL switching may exist between the control region and the data region. A PDCCH may be transmitted in the DL control region, and a PDSCH may be transmitted in the DL data region. Some symbols at the time of switching from DL to UL in a slot may be used as a time gap.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 6 illustrates an exemplary PDCCH transmission/reception process.

Referring to FIG. 6, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. System information (SIB1) broadcast in a cell includes cell-specific PDSCH configuration information, PDSCH-ConfigCommon. PDSCH-ConfigCommon includes a list (or look-up table) of parameters related to a time-domain resource allocation, pdsch-TimeDomainAllocationList. Each pdsch-TimeDomainAllocationList may include up to 16 entries (or rows) each being joint-encoded {K0, PDSCH mapping type, PDSCH start symbol and length (SLIV)}. Aside from (additionally to) pdsch-TimeDomainAllocationList configured through PDSCH-ConfigCommon, pdsch-TimeDomainAllocationList may be provided through a UE-specific PDSCH configuration, PDSCH-Config. pdsch-TimeDomainAllocationList configured UE-specifically has the same structure as pdsch-TimeDomainAllocationList provided UE-commonly. For K0 and an SLIV of pdsch-TimeDomainAllocationList, the following description is referred to.

Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.
- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.
- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 5 shows the characteristics of each SS.

**[Table 5]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 6 shows DCI formats transmitted on the PDCCH.

**[Table 6]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.
- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

### RRC signaling related to TCI state

Below, the parameters for RRC signaling containing information related to TCI status are described in detail (see 3GPP TS 38.331).

Further, in the NR system, a transmission configuration indicator (TCI) field included in a DL related DCI serves to dynamically indicate one of candidates of a plurality of QCL reference resources (e.g., CSI-RS resources or SSB resources) configured in the higher layer similarly to a PQI field of LTE.

Here, the QCL indication may include a QCL indication for a spatial parameter. For example, it may be indicated by which DL RS beam the corresponding PDSCH is transmitted through the TCI field among a plurality of DL RS resources configured in the higher layer. The UE that receives the indication may receive a corresponding PDSCH beam by applying a reception beam previously trained to be suitable for receiving the corresponding DL RS. That is, the TCI state may be related to the determination or timing of the direction of the downlink reception beam used to receive the PDSCH, etc.

First, BWP-DownlinkDedicated can be used to configure dedicated (UE-specific) parameters of downlink BWP. Referring to Table 7 and Table 8, information related to TCI status can be included in pdsch-Config of BWP-DownlinkDedicated, and DL reception beams related to BWP can be set based on the TCI status.

**[Table 7]**

| ***BWP-DownlinkDedicated* field descriptions** |
|---|
| ***beamFailureRecoverySCellConfig*** |
| Configuration of candidate RS for beam failure recovery in SCells. |
| ***pdcch-Config*** |
| UE specific PDCCH configuration for one BWP. |
| ***pdsch-Config*** |
| UE specific PDSCH configuration for one BWP. |
| ***sps-Config*** |
| UE specific SPS (Semi-Persistent Scheduling) configuration for one BWP. Except for reconfiguration with sync, the NW does not reconfigure *sps-Config* when there is an active configured downlink assignment (see TS 38.321 [3]). However, the NW may release the *sps-Config* at any time. Network can only configure SPS in one BWP using either this field or *sps-ConfigToAddModList.* |
| ***sps-ConfigDeactivationStateList*** |
| Indicates a list of the deactivation states in which each state can be mapped to a single or multiple SPS configurations to be deactivated, see clause 102 in TS 38.213 [13]. If a state is mapped to multiple SPS configurations, each of these SPS configurations is configured with the same *harq-CodebookID.* |
| ***sps-ConfigToAddModList*** |
| Indicates a list of one or more DL SPS configurations to be added or modified in one BWP. Except for reconfiguration with sync, the NW does not reconfigure a SPS configuration when it is active (see TS 38.321 [3]). |
| ***sps-ConfigToReleaseList*** |
| Indicates a list of one or more DL SPS configurations to be released. The NW may release a SPS configuration at any time. |
| ***radioLinkMonitoringConfig*** |
| UE specific configuration of radio link monitoring for detecting cell- and beam radio link failure occasions. The maximum number of failure detection resources should be limited up to 8 for both cell and beam radio link failure detection. For SCells, only periodic 1-port CSI-RS can be configured in IE *RadioLinkMonitoringConfig.* |
| ***sl-PDCCH-Config*** |
| Indicates the UE specific PDCCH configurations for receiving the SL grants (via SL-RNTI or SL-CS-RNTI) for NR sidelink communication. |
| ***sl-V2X-PDCCH-Config*** |
| Indicates the UE specific PDCCH configurations for receiving SL grants (i.e. sidelink SPS) for V2X sidelink communication. |

**[Table 8]**

| ***PDSCH-Config* field descriptions** |
|---|
| ***antennaPortsFieldPresenceDCI-1-2*** |
| Configure the presence of "Antenna ports" field in DCI format 1_2. When the field is configured, then the "Antenna ports" field is present in DCI format 1_2. Otherwise, the field size is set to 0 for DCI format 1_2 (See TS 38.212 [17], clause 7.3.1.1.3). If neither *dmrs-DownlinkForPDSCH-MappingTypeA-DCI-1-2* nor *dmrs-DownlinkForPDSCH-MappingTypeB-DCI-*1-2 is configured, this field is absent. |
| ***aperiodic-ZP-CSI-RS-ResourceSetsToAddModList, aperiodic-ZP-CSI-RS-ResourceSetsToAddModListDCI-1-2*** |
| AddMod/Release lists for configuring aperiodically triggered zero-power CSI-RS resource sets. Each set contains a *ZP-CSI-RS-ResourceSetId* and the IDs of one or more *ZP-CSI-RS-Resources* (the actual resources are defined in the *zp-CSI-RS-ResourceToAddModList*)*.* The network configures the UE with at most 3 aperiodic *ZP-CSI-RS-ResourceSets* and it uses only the *ZP-CSI-RS-ResourceSetId* 1 to 3. The network triggers a set by indicating its *ZP-CSI-RS-ResourceSetId* in the DCI payload. The DCI codepoint '01' triggers the resource set with *ZP-CSI-RS-ResourceSetld* 1, the DCI codepoint '10' triggers the resource set with *ZP-CSI-RS-ResourceSetld* 2, and the DCI codepoint '11' triggers the resource set with *ZP-CSI-RS-ResourceSetId* 3 (see TS 38.214 [19], clause 5.1.4.2). The field *aperiodic-ZP-CSI-RS-ResourceSetsToAddModList* applies to DCI format 1_1 and the field *aperiodic-ZP-CSI-RS-ResourceSetsToAddModListDCI-1-2* applies to DCI format 1_2 (see TS 38.214 [19], clause 5.1.4.2 and TS 38.212 [17] clause 7.3.1). |
| ***dataScramblingIdentityPDSCH, dataScramblingIdentityPDSCH2*** |
| identifiers) used to initialize data scrambling (c_init) for PDSCH as specified in TS 38.211 [16], clause 7.3.1.1. The *dataScramblingldentityPDSCH2* is configured if *coresetPoolIndex* is configured with 1 for at least one CORESET in the same BWP. |
| ***dmrs-DownlinkForPDSCH-MappingTypeA, dmrs-DownlinkForPDSCH-MappingTypeA-DCI-1-2*** |
| DMRS configuration for PDSCH transmissions using PDSCH mapping type A (chosen dynamically via *PDSCH-TimeDomainResourceAllocation*). Only the fields *dmrs-Type, dmrs-AdditionalPosition* and *maxLength* may be set differently for mapping type A and B. The field *dmrs-DownlinkForPDSCH-MappingTypeA* applies to DCI format 1_1 and the field *dmrs-DownlinkForPDSCH-MappingTypeA-DCI-1-2* applies to DCI format 1_2 (see TS 38.212 [17], clause 7.3.1). |
| ***dmrs-DownlinkForPDSCH-MappingTypeB, dmrs-DownlinkForPDSCH-MappingTypeB-DCI-1-2*** |
| DMRS configuration for PDSCH transmissions using PDSCH mapping type B (chosen dynamically via *PDSCH-TimeDomainResourceAllocation*)*.* Only the fields *dmrs-Type, dmrs-AdditionalPosition* and *maxLength* may be set differently for mapping type A and B. The field *dmrs-DownlinkForPDSCH-MappingTypeB* applies to DCI format 1_1 and the field *dmrs-DownlinkForPDSCH-MappingTypeB-DCI-1-2* applies to DCI format 1_2 (see TS 38.212 [17], clause 7.3.1). |
| ***rbg-Size*** |
| Selection between config 1 and config 2 for RBG size for PDSCH. The UE ignores this field if *resourceAllocation* is set to *resourceAllocationType1* (see TS 38.214 [19], clause 5.1.2.2.1). |
| ***referenceOfSLIVDCI-1-2*** |
| Enable using the starting symbol of the PDCCH monitoring occasion in which the DL assignment is detected as the reference of the SLiV for DCI format 1_2. When the RRC parameter enables the utilization of the new reference, the new reference is applied for TDRA entries with K0=0. For other entries (if any) in the same TDRA table, the reference is slot boundary as in Rel-15. PDSCH mapping type A is not supported with the new reference. The new reference of SLIV is not configured for a serving cell configured to be scheduled by cross-carrier scheduling on a scheduling cell with different numerology (see TS 38.212 [17] clause 7.3.1 and TS 38.214 [19] clause 5.1.2.1). |
| ***repetitionSchemeConfig*** |
| Configure the UE with repetition schemes. The network does not configure *repetitionSchemeConfig-r16* and *repetitionSchemeConfig-v1630* simultaneously to *setup* in the same *PDSCH-Config.* |
| ***resourceAllocation, resourceAllocationDCI-1-2*** |
| Configuration of resource allocation type 0 and resource allocation type 1 for non-fallback DCI (see TS 38.214 [19], clause 5.1.2.2). The field *resourceAllocation* applies to DCI format 1_1, and the field *resourceAllocationDCI-1-2* applies to DCI format 1_2 (see TS 38.214 [19], clause 5.1.2.2). |
| ***resourceAllocationType1GranularityDCI-1-2*** |
| Configure the scheduling granularity applicable for both the starting point and length indication for resource allocation type 1 in DCI format 1_2. If this field is absent, the granularity is 1 PRB (see TS 38.214 [19], clause 5.1.2.2.2). |
| ***sp-ZP-CSI-RS-ResourceSetsToAddModList*** |
| AddMod/Release lists for configuring semi-persistent zero-power CSI-RS resource sets. Each set contains a *ZP-CSI-RS-ResourceSetId* and the IDs of one or more *ZP-CSI-RS-Resources* (the actual resources are defined in the *zp-CSI-RS-ResourceToAddModList)* (see TS 38.214 [19], clause 5.1.4.2). |
| ***tci-StatesToAddModList*** |
| A list of Transmission Configuration Indicator (TCI) states indicating a transmission configuration which includes QCL-relationships between the DL RSs in one RS set and the PDSCH DMRS ports (see TS 38.214 [19], clause 5.1.5). |

### IAB (Integrated Access / Backhaul)

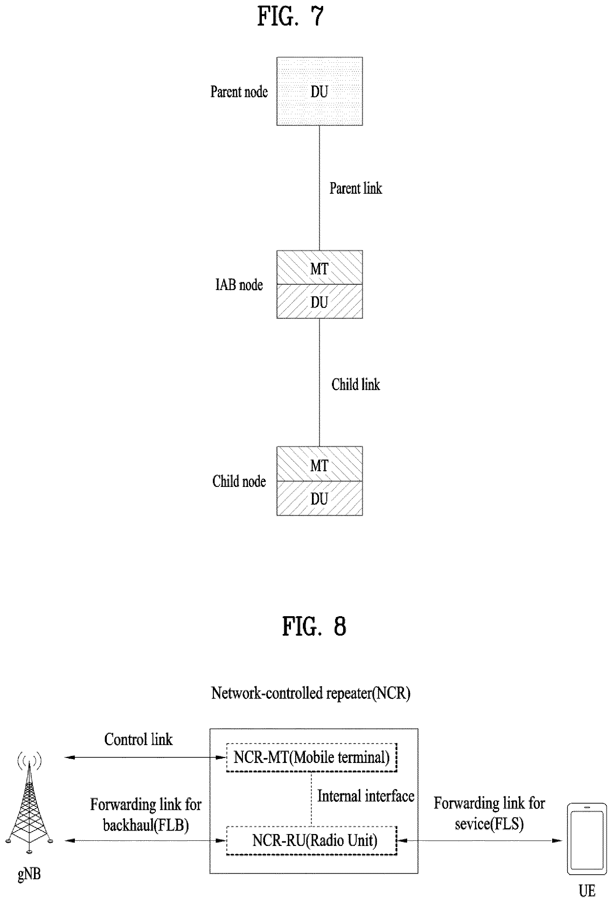

An example of a network with such integrated access and backhaul links is shown in Figure 7, where an IAB node or relay node (rTRP) can multiplex access and backhaul links in time, frequency, or space (e.g., beam-based operations).

The operations of different links may be at the same or different frequencies (also referred to as 'in-band' and 'out-band' relays). Efficient support of an out-band relay is important in some NR deployment scenarios, but it is very important to understand in-band operational requirements, which mean close interaction with an access link operating at the same frequency, to accept duplex constraints and avoid/mitigate interference.

In addition, operating an NR system in the mmWave spectrum may present several unique challenges, including experiencing severe short-term blocking that may not be easily mitigated by current RRC-based handover mechanisms due to the larger time scale required to complete a procedure in comparison to short-term blocking.

To overcome short-term blocking in mmWave systems, it may require a fast RAN-based mechanism (which does not necessarily require intervention of a core network) for inter- rTRP switching.

The need to mitigate short-term blocking of an NR operation in mmWave spectrum with the need for easier deployment of a self-backhauled NR cell may lead to the need for the development of an integrated framework that enables fast switching of access and backhaul links.

In addition, Over-The-Air (OTA) coordination between rTRPs may be considered as mitigating interference and supporting end-to-end route selection and optimization.

The following requirements and aspects may need to be resolved by an integrated access and wireless backhaul (IAB) for NR.
- Efficient and flexible operation for in-band and out-band broadcasting in indoor and outdoor scenarios
- Multi-hop and redundant connections
- End-to-end route selection and optimization
- Backhaul link support with high spectrum efficiency
- Legacy NR UE support

Legacy NR (new RAT) is designed to support half-duplex devices. In addition, half duplex of an IAB scenario is supported and worthy of being targeted. Furthermore, a full duplex IAB device may be studied.

In the IAB scenario, if each IAB node or Relay Node (RN) does not have scheduling capability, a Donor gNB (DgNB) must schedule the entire links among DgNB-related RNs and UEs. In other words, the DgNB may collect traffic information from all related RNs, make scheduling decisions for all links, and then inform each RN of schedule information.

FIG. 7 schematically illustrates an example of a parent link and a child link.

As shown in FIG. 7, a link between an IAB node and a parent node is called a parent link, and a link between an IAB node and a child node/UE is called a child link. That is, a link between MT and parent DU is called a parent link, and a link between DU and child MT/UE is called a child link.

Yet, depending on interpretation or perspective, a link between an IAB node and a parent node may be called a backhaul link, and a link between an IAB node and a child node/UE may be called an access link.

An IAB node may receive a slot format configuration for communication with a parent node and a slot format configuration for communication with a child node/access UE.

In the existing IAB node, a TDM operation in which a DU and an MT operate through different time resources has been performed. On the other hand, resource multiplexing such as SDM/FDM, FC, etc. between the DU and the MT is required for efficient resource operation. As shown in FIG. 7, a link between the IAB node (IAB MT) and the parent node is referred to as a parent link, and a link between the IAB node (IAB DU) and the child node (child MT) is referred to as a child link. At this time, the TDM operation between the parent link and the child link has been discussed, and the SDM/FDM and FD operations are being discussed.

The DU and the MT existing in the same IAB node (or co-located) cannot operate simultaneously due to intra-node interference, slot/symbol boundary misalignment, power sharing, etc., and can operate in TDM. On the other hand, multiplexing of SDM/FDM may be used between the DU and the MT. Such multiplexing is applicable to an example case in which, since DU and MT use different panels, there is little interference between the panels. In this case, DU and MT existing (or co-located) in the same IAB node can transmit or receive data or information simultaneously, but it is impossible for each of the DU and the MT to perform transmission and reception simultaneously or to perform reception and transmission simultaneously.

Alternatively, FD may be used between the DU and the MT. This is applicable in cases where there is little interference between the DU and the MT, such as when a frequency domain where the DU operates and a frequency domain where the MT operates are far apart. In this case, the DU and the MT existing in the same IAB node (or co-located) can freely transmit and receive data simultaneously. The DU and the MT can transmit or receive data simultaneously, and it is also possible for each of the DU and the MT to perform transmission and reception simultaneously or to perform reception and transmission simultaneously.

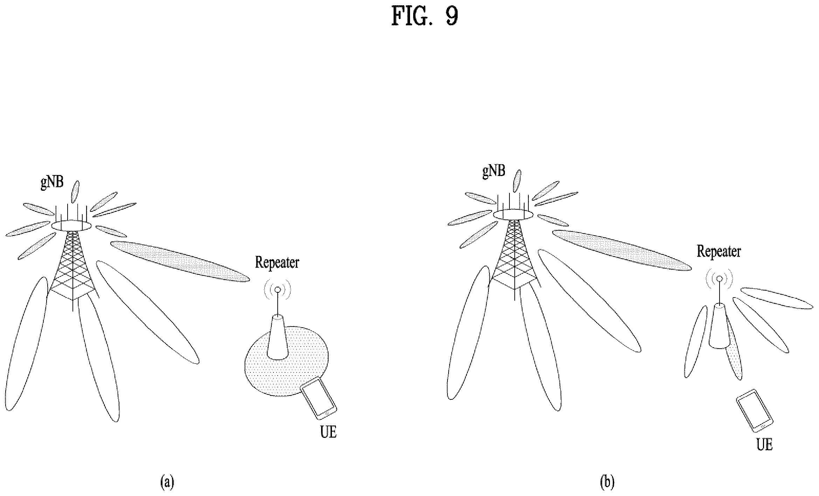

N MT-CCs and M DU-cells may exist in the IAB node. FIG. 9 shows an example where the IAB node is composed of three MT-CCs (where N=3) and three DU-cells (where M=3). MT-CCs existing in the IAB node may operate through the same or different frequency resources, and one MT-CC may be connected to one or more parent DU-cells. DU-cells existing in the IAB node may operate through the same or different frequency resources.

For a specific MT-CC/DU-cell pair within the IAB node, the MT-CC and the DU-cell may be in either TDM relationship or no-TDM relationship for the following four Tx/Rx direction combinations, and TDM or no-TDM may vary for each Tx/Rx combination.
- DU-Tx / MT-Tx
- DU-Rx / MT-Rx
- DU-Tx / MT-Rx
- DU-Rx / MT-Tx

For example, for a specific MT-CC/DU-cell pair, all of the four Tx/Rx combinations can operate with TDM. In this case, the corresponding DU-cell and the corresponding MT-CC should always operate with TDM regardless of Tx/Rx directions of the DU-cell and the MT-CC. In another example, for a specific MT-CC/DU-cell pair, all of the four Tx/Rx combinations can operate with no-TDM. In this case, the corresponding DU-cell and MT-CC can always operate simultaneously with no-TDM regardless of the Tx/Rx directions of the DU-cell and MT-CC. In another example, for a specific MT-CC/DU-cell pair, DU-Tx/MT-Tx and DU-Rx/MT-Rx can operate with no-TDM, and DU-Tx/MT-Rx and DU-Rx/MT-Tx can operate with TDM. The above-described operation relates to a method (e.g., SDM/FDM) for allowing simultaneous operation when the Tx/Rx directions of the DU-cell and the MT-CC are the same, and this method can operate simultaneously when the Tx/Rx directions of the DU-cell and the MT-CC are the same. TDM/no-TDM information for each Tx/Rx combination can be configured/determined differently or independently for each specific MT-CC/DU-cell pair within the IAB node.

At this time, the IAB MT may be connected to two parent DUs using, for example, a dual-connectivity method or a DAPS-HO method.

### Network-controlled repeater (NCR) in NR

Coverage is a fundamental aspect of cellular network deployments. Mobile operators rely on different types of network nodes to offer blanket coverage in their deployments. Deployment of regular full-stack cells is one option but it may not be always possible (e.g., no availability of backhaul) or economically viable. As a result, new types of network nodes have been considered to increase mobile operators' flexibility for their network deployments. For example, Integrated Access and Backhaul (IAB) was introduced in Rel-16 and enhanced in Rel-17 as a new type of network node not requiring a wired backhaul. Another type of network node is the RF repeater which simply amplify-and-forward any signal that they receive. RF repeaters have seen a wide range of deployments in 2G, 3G and 4G to supplement the coverage provided by regular full-stack cells. In Rel-17, RAN4 specified RF and EMC requirements for such RF repeaters for NR targeting both FR1 and FR2. While an RF repeater presents a cost effective means of extending network coverage, it has its limitations. An RF repeater simply does an amplify-and-forward operation without being able to take into account various factors that could improve performance. Such factors may include information on semi-static and/or dynamic downlink/uplink configuration, adaptive transmitter/receiver spatial beamforming, ON-OFF status, etc.

A network-controlled repeater is an enhancement over conventional RF repeaters with the capability to receive and process side control information from the network. Side control information could allow a network-controlled repeater to perform its amplify-and-forward operation in a more efficient manner. Potential benefits could include mitigation of unnecessary noise amplification, transmissions and receptions with better spatial directivity, and simplified network integration.

FIG. 8 is a diagram illustrating an example of topology in which a network-controlled repeater (NCR) performs transmission and reception between the gNB and the UE.

Referring to FIG. 8, the NCR may include a radio unit (RU) and a mobile terminal (MT).

The gNB may include a central unit (CU) and/or a distributed unit (DU), and the NCR may be connected to the gNB. In the NCR, the MT may form a control link with the gNB, and the RU may form a forwarding link for backhaul with the gNB and a forwarding link for access with the UE.

The RU of the NCR may be composed of only an RF layer. The RU may receive a signal transmitted by the gNB through the forwarding link at the RF end and may forward the received signal to the UE. As a result, the signal received from the UE may be received by the RF end, and the received signal may be forwarded to the gNB. The RU may only transmit signals between the gNB and the UE, and may not generate signals/channels by itself and transmit the generated signals/channels to the gNB/UE. Alternatively, the RU receives signals/channels from the gNB/UE, but does not detect the received signals/channels. In order to forward the received signal, the RU may control the directions of the Tx/Rx beams, the DL/UL directions, ON/OFF information, transmission (Tx) power, etc. in the RF end. However, this RU operation cannot be determined by the NCR itself, and can be entirely controlled by the gNB.

The MT of the above NCR may include an RF layer and L1, L2, and/or L3 layers. For example, the MT may include only an RF layer and an L1 layer or may include the L1 and L2 layers. Alternatively, the MT may include an RF layer and L1/L2/L3 layers. The MT may detect/receive a signal/channel transmitted by the gNB and may generate a signal/channel to be transmitted to the gNB. In addition, the MT may receive information (e.g., side control information) necessary to control the operation of the RU from the gNB. Meanwhile, the MT may not perform transmission and reception with the UE.

FIG. 9 is a diagram illustrating the radio frequency (RF) repeater and the NCR.

Referring to FIG. 9(a), the existing RF repeater may perform beamforming to which an omni-direction or fixed direction is applied. In contrast, referring to FIG. 9(b), the NCR can adaptively adjust the transmission/reception beam directions of the NCR according to the UE position and the channel condition of the UE, thereby obtaining a beamforming gain.

In addition, in the case of the existing RF repeater, since the DL/UL directions are not distinguished from each other in the TDD system, transmission and reception in the DL and UL directions are always performed simultaneously. Alternatively, only the fixed TDD configuration is applied to the existing RF repeater, so that switching between the DL direction and UL direction has been performed using a fixed time pattern. In contrast, the NCR may perform DL/UL switching in consideration of a TDD configuration. Through this, switching is being considered. As a result, the NCR can enable adaptive DL/UL operation, may minimize power consumption caused by forwarding unnecessary signals, and may also minimize interference.

In addition, in the case of the existing RF repeater, the power of a signal that is received regardless of whether the gNB and the UE transmit signals is always amplified and transmitted. As a result, unnecessary power consumption and interference to the surroundings are unavoidably increased. In contrast, the NCR performs ON/OFF operations, and when there is no signal to be transmitted to the gNB and UE, the operation of the RU is turned off, so that unnecessary signals are not transmitted.

In addition, in the case of existing RF repeaters, power of a signal received at a fixed ratio is amplified and transmitted. When a signal is transmitted with unnecessarily large power, interference affecting the surroundings may decrease by reducing transmission (Tx) power of the NCR. When a signal is transmitted with low power, transmission (Tx) power of the NCR is increased so that the signal can be stably transmitted to the receiver.

In addition, the existing RF repeater has been operated without recognizing a DL/UL slot boundary. On the other hand, in order for the NCR to adaptively adjust beamforming, ON/OFF, DL/UL directions, transmission power, etc. as described above, the NCR must know transmission/reception (Tx/Rx) boundaries of a downlink (DL). As a result, the RU operation can be applied differently for each unit time (e.g., slot/symbol).

### Side control information for NCR

Hereinafter, the operation in the NCR will be assumed for convenience of description. However, the content described below can be applied to devices other than the NCR. In particular, the content described below can be applied for the operation of RIS. To this end, the NCR mentioned in the present disclosure can be replaced with `RIS' and expanded/interpreted. In this case, the RU may serve to forward signals from the gNB to the UE in RIS and to forward signals from the UE to the gNB in RIS, and the MT may serve to receive side control information required for controlling signal transmission of the RU from the gNB. Meanwhile, the term "network" may hereinafter be interpreted as "gNB" or "CU/DU". In addition, the term "gNB" may hereinafter be interpreted as "network", "CU", or "DU".

In order for the NCR to forward the signal received by the RU, it may be considered that the directions of transmission/reception (Tx/Rx) beams, DL/UL directions, ON/OFF states, transmission (Tx) power, etc. are adjusted at the RF end. However, the RU operation cannot be determined by the NCR itself, and may be entirely controlled by the gNB. To this end, the MT may receive information (i.e., side control information) necessary to control the RU operation from the gNB. This side control information may be transmitted through L1/L2 signaling such as MAC-CE and DCI.

The above-described side control information may include all or part of the following information.
- Beamforming information: Information on the transmission/reception (Tx/Rx) beam direction of the RU
   Here, beamforming information may include a beam direction for UL transmission to the gNB, a beam direction for DL reception from the gNB, a beam direction for DL transmission to the UE, and/or a beam direction for UL reception from the UE.
- Timing information to align transmission/reception boundaries of network-controlled repeater (NCR): Information for the RU to align transmission/reception (Tx/Rx) slots symbol boundaries
- Information on UL-DL TDD configuration: information on DL/UL directions of the RU
- ON-OFF information for efficient interference management and improved energy efficiency: Information on ON-OFF operations of the RU
- Power control information for efficient interference management: Information on transmission (Tx) power of the RU, and such information may include UL transmission (Tx) power to the gNB and/or DL transmission (Tx) power to the UE.

The above side control information can be applied differently for each time resource. In this case, it is necessary to indicate different kinds of side control information for each time resource. Specifically, when the side control information is transmitted through MAC-CE and/or DCI, the side control information can be transmitted through different MAC-CEs and/or DCIs for each time resource unit. In this case, it is necessary to transmit side control information for each time resource unit. Considering this situation, when side control information is transmitted once, it may be considered to indicate side control information for multiple time resource units. In this case, there may be a disadvantage in that side control information for multiple time resource units must be determined and configured in advance, but efficient signaling is possible.

A method for indicating a beam change of the RU to the NCR based on various kinds of side control information during the NCR operation in the NR environment will hereinafter be described in detail with reference to the attached drawings.

### Indication of gNB to RU link beam direction for NCR

Even when a fixed NCR with no mobility is used, a change in scattering may occur. Alternatively, the NCR with mobility may also be used. Considering this situation, an instruction for beam adaptation between the gNB and the RU (i.e., RU included in NCR) may be required. However, if only the RF layer is included in the RU, the RU cannot directly receive information related to control of the transmission and reception beams. Alternatively, even if there is an additional layer other than the RF layer in the RU, since the RU needs to relay the transmission and reception, it may be considered that the beam information related to the beam adaptation is received or transmitted from the MT. In addition, since it cannot be ruled out that the NCR considering mobility after Rel-19, rather than the fixed NCR, may be discussed, it is necessary to propose a method for the MT to be instructed with beam information between the gNB and the RU by considering the above-described case.

Since the RU cannot perform data communication with the gNB (i.e., it is impossible for the RU to directly receive information for the RU from the gNB), the NCR may basically determine or recognize that the transmission/reception (Tx/Rx) beams used by the MT are used as the transmission/reception (Tx/Rx) beams of the RU. However, since the transmission/reception (Tx/Rx) beams used by the MT are not fixed to one type, it is necessary to define which one of the transmission/reception (Tx/Rx) beams of the MT will be used as the RU beam by the NCR. In this regard, at least one of the following methods may be considered.

For all the scenarios and alternatives described below, the gNB may instruct beam information for the RU based on at least one of the scenarios and alternatives described below according to the capability of the NCR. Here, the capability of the NCR may be information on whether the C-link (i.e., a control link of MT) and the backhaul link (RU) of the NCR can operate based on different beam directions. That is, the fact that the backhaul link has a different beam from the C-link means that separate beam instruction for the backhaul link is possible, and the capability information may also be defined as the capability indicating whether beam direction indication for the backhaul link for the RU is possible. In this case, if the capability that beam direction indication for each of the C-link and the backhaul link is possible is reported to the gNB (or, a report of either the fact that the C-link and the backhaul link can operate based on different beams or the capability of the C-link and the backhaul link to operate based on the different beams), the NCR may explicitly receive instruction information on the beam direction of the backhaul link from the gNB. In this case, with respect to the beam direction for the backhaul link, the following scenario 1 can be applied. In other words, if the capability information that separate beam direction instruction for the backhaul link is possible is reported, the NCR may receive explicit instructions from the gNB about the beam direction of the backhaul link.

On the other hand, if the capability information that separate beam direction instruction for the backhaul link is impossible is reported (or if the capability information that the C-link and the backhaul link cannot operate based on different beams is reported), the NCR cannot receive explicit instructions about the beam direction of the backhaul link from the gNB, so that the NCR can receive instructions about the beam direction of the backhaul link according to a predetermined appointment or agreement (Scenario 2). In other words, if the backhaul link and the C-link use the same beam (i.e., there is no capability to receive instructions about separate beam direction for the backhaul link), the NCR may determine the beam direction for the backhaul link based on a predefined rule.

Hereinafter, a link (i.e., a gNB-RU link) for forwarding formed between the RU included in the NCR and the gNB will be defined as a backhaul link, and a link (i.e., a gNB-MT link) formed between the MT included in the NCR and the gNB will be defined as a C-link. In addition, the DL reception beam and/or UL transmission beam of the RU to be described below may correspond to the DL reception and/or UL reception beam for the backhaul link, and the DL reception beam and/or UL transmission beam of the MT may correspond to the DL reception and/or UL reception beam for the C-link. Hereinafter, for convenience of explanation, the DL reception and/or UL reception beam for the C-link will be defined as the DL reception beam and/or UL transmission beam of the MT, and the DL reception and/or UL reception beam for the backhaul link will be defined as the DL reception beam and/or UL transmission beam of the RU.

With respect to Scenarios 1 and 2 to be described below, the same TCI states as the TCI states configured for the operation of MT (or NCR-MT) may be assumed for the beam of the forward backhaul link (or NCR-Fwd) of the NCR (see RAN1#109-e session). In this case, additional definition for indicating which one of TCI states among the plurality of TCI states configured in the MT will be used for configuration/application of the DL reception beam of the RU. For example, the TCI state to be applied to the DL reception beam of the RU for the backhaul link may be assumed to be the same as the TCI state to be applied to the MT for a time resource corresponding to a specific time resource for DL reception through the backhaul link. Meanwhile, a method for determining the TCI state to be applied to the DL reception beam of the RU when the MT does not perform DL reception in the specific time resource needs to be additionally considered.

Alternatively, the TCI state to be applied to the DL reception beam of the RU or the backhaul link of the RU may be configured and/or determined independently from the TCI state currently applied to the MT. In this case, the method for configuring the TCI state to be applied to either the DL reception beam of the RU or the forward backhaul link of the RU needs to be additionally considered. Alternatively, the method for determining the beam direction to be applied for UL transmission of the backhaul link may also need to be discussed. If the UL in the C-link (or the control link) for the MT of the NCR and the UL in the backhaul link operate based on TDM, the method for determining the UL transmission beam of the backhaul link based on the specific time resource as described above may not be appropriate. Considering this situation, the beam of the RU for the backhaul link in the time resource where the MT does not perform data transmission/reception may be determined as a beam that is to be applied to the RU (or a backhaul link) independently from the beam to be applied to the MT as follows.
- The beam direction to be applied to the backhaul link (or a forward backhaul link) is explicitly indicated (related to Scenario 1 to be described later).
- The beam direction to be applied to the backhaul link is determined to be a beam corresponding to a beam to be applied by the MT to a specific signal/channel (related to Scenario 2 to be described later)
- The beam direction to be applied to the backhaul link is determined to be a beam corresponding to a beam most recently applied by the MT for transmission and reception (related to Scenario 3 to be described later).

In this regard, the RU beam for the backhaul link can be determined/applied by considering the relationship between the time resource for the backhaul link and the time resource for the control link. First, when the MT performs the transmission and/or reception operation in a specific time resource where transmission/reception for the backhaul link is performed (i.e., when transmission actions are simultaneously performed in the backhaul link and the control link), the beam of the forward backhaul link can be applied or determined as a beam corresponding to the beam direction (e.g., TCI state) to be applied to the NCR-MT (related to Scenario 3). In contrast, if the MT does not perform the transmission and/or reception operation in the specific time resource (i.e., when simultaneous transmission is not performed in the backhaul link and the control link), the beam of the RU for the forward backhaul link can be applied according to Scenario 1 or Scenario 2 to be described below. Hereinafter, Scenarios 1 to 3 will be described in detail based on the above-described content.

### 1. Scenario 1 - Explicit Beam Instruction for Backhaul Link

The NCR may receive the transmission/reception beams of the RU (or Tx/Rx beams of the RU or Tx/Rx beams for the NCR-Fwd) from the gNB based on the Tx/Rx beam information of the MT (or Tx/Rx beams for the C-link). For example, the gNB may directly instruct the NCR (or MT) on the Tx/Rx beam information for the backhaul link via the C-link. In this case, the NCR (or MT) may be instructed with the RU's Tx/Rx beams (or the beam directions for the backhaul link) which are different in direction from the MT's Tx/Rx beams from the gNB.

### (1) Method for indicating DL reception beam of RU

Among the beams of the RU, the DL reception beam for the backhaul link can be instructed (or indicated) by the gNB through the following methods. Here, the DL reception beam of the RU may be applied as the reception beam of the MT corresponding to an instruction from the gNB, or may be aligned with the MT reception beam corresponding to such instruction. That is, the gNB may instruct (indicate) the DL reception beam of the RU by instructing the MT or NCR to recognize the SSB index, CSI-RS index, TCI state ID, etc. related to the MT (or C-link) through RRC/MAC-CE/DCI.

Meanwhile, the TCI state ID may be a UE-specific PDSCH configuration instructed to one BWP (BWP-DownlinkDedicated) defined in the above-described 'PDSCH-Config' (see `3GPP TS 38.331'). That is, since the CSI-RS and/or the TCI state ID are BWP-specific of the MT (e.g., since the CSI-RS and/or the TCI state ID are not cell-common configurations but are UE-specific values or configurations), a reference (criterion) indicating which BWP will be instructed by the DL reception beam of the RU through the CSI-RS index and/or TCI state ID needs to be defined in advance. The reference BWP that serves as the criterion may be promised/agreed upon in advance. For example, the reference BWP (or the BWP corresponding to the TCI state ID for instructing the DL reception beam of the RU) may be a default BWP of the MT or may be an initial BWP of the MT. Alternatively, the gNB may indicate or designate at least one of the BWPs of the MT as the reference BWP via RRC/MAC-CE/DCI. For example, the gNB may indicate one beam from among a plurality of beams configured for the C-link as a DL reception beam for the backhaul link via the TCI state ID related to the C-link.

That is, when the gNB determines that beam instruction of the backhaul link for the NCR is possible based on the capability information, the gNB may indicate a beam for the backhaul link through information on a TCI state ID related to at least one beam from among the plurality of beams configured for the control link (via RRC signaling). In this case, the NCR may configure/determine a beam for the backhaul link (or the DL reception beam for the backhaul link) as a beam corresponding to the indicated TCI state ID from among the plurality of beams for the control link.

Alternatively, when the gNB indicates the DL reception beam (or the DL reception beam of the RU), the gNB may also transmit information on the number of slots, which is a slot offset (hereinafter referred to as time offset information). Here, the time offset information may include information on a time offset in units of slots, subframes, or symbols. For example, when the time offset information for K slots is also indicated together with the indication of the DL reception beam of the RU, the gNB can expect that the changing or switching of the DL reception beam of the RU will be performed from K slots with respect to the MT position after the beam change has been indicated (or after the DL RS for beam change has been indicated). Alternatively, even if the slot offset information for the number of slots is not separately indicated, it may be defined that the change to the DL reception beam of the RU instructed after lapse of a specific time according to the predefined promise or agreement is applied. A specific operation can be agreed upon as a default behavior for such a time offset. For example, if the slot offset (or the number of slots) is indicated, the indicated DL reception beam can be applied to the RU during a time period corresponding to the indicated slot offset from the predetermined promised time. Alternatively, when the change of the DL beam of the RU and the time offset (K slots/K subframes/K symbols) are indicated together, the beam direction of the DL of the RU toward the indicated beam direction may be configured during the time period corresponding to the time offset from the predetermined promised time. Additionally, after the above time period has elapsed, the direction of the DL beam of the RU may be changed to the direction of the previous DL beam used before the instruction of the beam direction or may be changed to a default beam direction agreed upon in advance.

Alternatively, when the explicit RU DL beam direction (or the backhaul link beam direction) is not indicated, the DL beam direction of the RU can be applied or determined as a default beam by the predetermined agreement or promise (for example, if the capability information indicating that the beam direction for the backhaul link is possible is reported but the explicit instruction information has not yet been received). The default beam may be configured or promised by the indication method in Scenario 2 to be described later. Here, the application time of the default beam or the time of the default beam may indicate an example case in which there is no indication of the explicit beam direction after expiration of the valid time for the indication of the explicit beam direction, may be an example case in which there is no valid DL beam of the RU in a specific time resource, or may be an example case in which the backhaul link is turned off. In other words, if there is no indication of the explicit beam direction or if there is no valid RU DL beam (or backhaul link beam) in a specific time resource, the previously promised/agreed default beam may be applied as a DL beam of the RU. Such a default beam can be determined/configured by the method of Scenario 2 to be described below, etc. Alternatively, the forwarding operation through the backhaul link may not be performed during the specific time resource (or during the time when the default beam is applied).

### (2) Method for indicating the UL transmission beam of the RU

The gNB can explicitly indicate (via the MT) the UL transmission beam of the RU for the backhaul link (among the beams of the RU). Here, the gNB may indicate the UL transmission beam direction of the RU by indicating the beam direction corresponding to the transmission beam of the MT.

Specifically, the gNB may instruct the MT to recognize the UL transmission beam of the RU by indicating the UL transmission beam of the MT through an SRI, etc. Similar to the DL reception beam of the RU described above, the UL transmission beam of the MT is a BWP-specific configuration, so that the BWP to which the UL transmission beam of the RU is instructed may be defined in advance through a predetermined agreement/promise. For example, the BWP to which the UL transmission beam of the RU is instructed may be a default BWP for the MT or may be an initial BWP for the MT. Alternatively, the gNB may designate or specify (or configure) at least one BWP among the BWPs of the MT as a BWP including a TCI state ID (or SRI) for instructing the UL transmission beam of the RU through RRC/MAC-CE/DCI.

That is, if the gNB determines that the beam of the backhaul link can be instructed through the capability information, the gNB may indicate the UL transmission beam of the backhaul link through the SRI for the control link (related to at least one of the plurality of beams configured for the control link). In this case, the NCR may receive an instruction of a beam (e.g., UL transmission beam) to be used for the backhaul link among the plurality of beams for the control link through the indicated SRI.

Alternatively, when the gNB indicates the UL transmission beam (or the UL transmission beam of the RU), the gNB may also transmit information on the number of slots (hereinafter referred to as time offset information). Here, the time offset information may include information on a time offset in units of slots, subframes, or symbols. For example, when the time offset information for K slots is also indicated together with the indication of the UL transmission beam of the RU, the gNB can expect that the changing or switching of the UL transmission beam of the RU will be performed from K slots with respect to the MT position after the beam change has been indicated (or after the instruction of the beam change has been received). Alternatively, even if the slot offset information for the number of slots is not separately indicated, it may be defined that the change to the UL transmission beam of the RU instructed after lapse of a specific time according to the predefined promise or agreement is applied. A specific operation can be agreed upon as a default behavior for such a time offset. For example, if the slot offset (or the number of slots) is indicated, the indicated UL transmission beam can be applied to the RU during a time period corresponding to the indicated slot offset from the promised time. Alternatively, when the change of the UL beam of the RU and the time offset (K slots/K subframes/K symbols) are indicated together, the beam direction of the UL of the RU toward the indicated beam direction may be configured during the time period corresponding to the time offset from the predetermined promised time. Additionally, after the above time period has elapsed, the direction of the DL beam of the RU may be changed to the direction of the previous DL beam used before the instruction of the beam direction or may be changed to a default beam direction agreed upon in advance.

Alternatively, when the explicit RU UL beam (or the beam for the backhaul link) is not indicated, the UL beam direction of the RU can be applied or determined as a default beam by the predetermined agreement or promise. The default beam may be configured or promised by the indication method in Scenario 2 to be described later. Here, the application time of the default beam or the time of the default beam may indicate an example case in which there is no indication of the explicit beam direction after expiration of the valid time for the indication of the explicit beam direction, may be an example case in which there is no valid UL beam of the RU in a specific time resource, or may be an example case in which the backhaul link is turned off. In other words, if there is no indication of the explicit beam direction or if there is no valid RU UL beam (or backhaul link beam) in a specific time resource, the previously promised/agreed default beam may be applied as a UL beam of the RU. Such a default beam can be determined/configured by the method of Scenario 2 to be described below, etc. Alternatively, the forwarding operation through the backhaul link may not be performed during the specific time resource (or during the time when the default beam is applied).

### (3) Beam instruction of RU without distinction between RU DL reception beam and RU UL transmission beam

Alternatively, the gNB may explicitly indicate the RU's beam (or the RU DL reception beam and the RU UL transmission beam) for the backhaul link through the above-described method without distinction between the RU's DL reception beam and the RU's UL transmission beam. That is, the gNB may indicate a change of the RU's DL reception beam and the RU's UL transmission beam for the backhaul link through a single instruction. For example, the gNB may indicate a change of both the RU's DL reception beam and the RU's UL transmission beam by indicating specific information for the RU's beam change to the MT. Here, the single instruction (or the instruction of specific information) may be indicated based on the MT's DL reception beam or may be indicated based on the MT's UL transmission beam. Meanwhile, for convenience of explanation, in the following description, the DL reception beam of the RU and the UL transmission beam of the RU will be defined as the beam of the RU or the beam of the backhaul link.

For example, the gNB may instruct the MT to change the beam of the RU for the backhaul link using an SSB index, CSI-RS index, TCI state ID, etc. through RRC/MAC-CE/DCI. Alternatively, the gNB may instruct the MT to change the beam of the RU for the backhaul link using SRI (Sounding Reference Signal resource indicator), etc. Meanwhile, there may be no independent beam report in the RU, so that the RU's beams can be aligned based on the beam of the MT. Accordingly, the QCL relationship between the transmission/reception (Tx/Rx) beams of the MT can be equally applied to the (reception/transmission) beams of the RU. For example, in relation to the above-described method, if the gNB instructs the MT to recognize the SSB index and/or the CSI-RS index for beam change of the RU, the DL reception beam of the RU may be aligned with the DL reception beam of the MT corresponding to the instructed SSB index and/or CSI-reception index, and the UL transmission beam of the RU may be aligned with the UL transmission beam of the MT corresponding to the instructed SSB index and/or CSI-reception index. In other words, the gNB may indicate the beam of the RU through the SSB index and/or CSI-reception index related to the control link for the MT.

Alternatively, the time offset information (or information on the number of slots) may be transmitted together with the beam instruction of the RU. Here, the time offset information may include information on a time offset in units of slots, subframes, or symbols. For example, when the time offset information for K slots is also indicated together with the beam instruction of the RU, the gNB can expect that the changing or switching of the beam of the RU will be performed from K slots with respect to the MT position after the beam change has been indicated (or after the instruction of the beam change has been received). Alternatively, even if the slot offset information for the number of slots is not separately indicated, it may be defined that the change to the beam of the RU instructed after lapse of a specific time according to the predefined promise or agreement is applied. A specific operation can be agreed upon as a default behavior for such a time offset. For example, if the slot offset (or the number of slots) is indicated, the indicated RU beam can be applied to the RU during a time period corresponding to the indicated slot offset from the predetermined promised time. Alternatively, when the beam change of the RU and the time offset (K slots/K subframes/K symbols) are indicated together, the beam direction of the RU toward the indicated beam direction may be configured during the time period corresponding to the time offset from the predetermined promised time. Additionally, after the above time period has elapsed, the beam of the RU may be changed to the direction of the previous DL beam used before the instruction of the beam direction or may be changed to a default beam direction agreed upon in advance.

Alternatively, when the explicit RU beam (or the beam for the backhaul link) is not indicated, the beam of the RU can be applied or determined as a default beam by the predetermined agreement or promise. The default beam may be configured or promised by the instruction method in Scenario 2 to be described later. Here, the application time of the default beam or the time of the default beam may indicate an example case in which there is no instruction of the explicit beam direction after expiration of the valid time for the instruction of the explicit beam direction, may be an example case in which there is no valid RU beam in a specific time resource, or may be an example case in which the backhaul link (NCR-Fwd) is turned off. In other words, if there is no instruction of the explicit beam direction or if there is no valid RU beam (or beam for backhaul link) in a specific time resource, the previously promised/agreed default beam may be applied as the beam of the RU. Such a default beam can be determined/configured by the method of Scenario 2 to be described below, etc. Alternatively, the forwarding operation through the backhaul link may not be performed during the specific time resource (or during the time when the default beam is applied).

Meanwhile, the above-described "instructing a change of the DL reception beam and/or the UL transmission beam with a single instruction, rather than performing instructions of the DL reception beam and the UL transmission beam separately" can be performed based on the integrated TCI framework. Here, the integrated TCI framework is a concept introduced in Rel-17 MIMO, and is different from the existing TCI framework that independently indicates a TCI state for each DL/UL channel/RS. For example, the existing TCI framework has an advantage in terms of flexibility, but has a disadvantage in terms of signaling overhead and delay. That is, for most UEs to which only one beam is applied at a time, the gNB must separately perform a beam change instruction for each DL/UL channel/RS in order to perform beam change of the UE. In contrast, the integrated TCI framework (in Rel-17 MIMO) may support integrated beam control for DL/UL data channels (PDSCH/PUSCH), DL/UL control channels (PDCCH/PUCCH), AP CSI-RS and SRS based on the (indicated) TCI state after definition of the joint TCI state. For example, the integrated TCI framework may use a DL DCI format (1_1/1_2) in a DCI-based manner, and may include or omit PDSCH allocation information (i.e., data assignment). That is, in the integrated TCI framework, the above-described DL DCI format may be used for beam instruction through the TCI state even when there is no data/channel to be transmitted and/or received. In this case, some of the existing TCI field indicator values in the DCI may be changed and indicated to be used as the beam instruction.

Based on the above-described situation (or based on the integrated TCI framework), in a way that "indicates changing of the DL reception beam or the UL transmission beam with a single instruction instead of performing the instructions of the DL reception beam and the UL transmission beam separately", the gNB can instruct the NCR to simultaneously change the beam of the RU (or the DL reception beam and the UL transmission beam of the RU) included in the NCR by indicating the joint TCI state. Here, the joint TCI state may be a TCI state related to the C-link which is the control link. In this way, when the change of the DL reception beam and the UL transmission beam of the RU is indicated by the instruction of the joint TCI state, the application time of the joint TCI state and the application time of the indicated joint TCI state may be indicated together with the instruction of the ID of the joint TCI state. Alternatively, it may be considered that the application time of the joint TCI state and the application time of the indicated joint TCI state are configured by a predetermined agreement or promise. For example, the application time of the joint TCI state may be applied continuously after lapse of a certain number of slots/symbols from the time when the instruction of the joint TCI state is received by the NCR or MT, or may be applied from the reception time point.

### 2. Scenario 2 - Beam Decision of RU Based on Predefined Rules

Scenario 2 describes cases where the transmission/reception (Tx/Rx) beams of the RU are not directly indicated, but a beam corresponding to a specific transmission/reception beam of the MT that is agreed/defined/configured in advance (i.e., a predefined rule) is used (e.g., when the NCR does not have the capability to receive an instruction of the beam of the backhaul link, or even if the NCR has the capability, the NCR does not receive the beam instruction from the gNB). For example, although the gNB does not directly indicate the transmission/reception beams for the backhaul link to the MT, the gNB can expect that the transmission/reception beams for the backhaul link will be configured based on a predetermined promise or agreement to be described below. In this case, the transmission/reception beams of the RU can be defined/agreed/configured in advance to correspond to the beams used by the MT for transmission and reception of a specific signal/channel. In this case, the transmission/reception beams of the RU and the transmission/reception beams of the MT can be different from each other depending on the beam direction that the gNB indicates to the MT of the NCR.

Hereinafter, Scenario 2 described below can be applied (or limited) to a case where the frequency at which the MT operates and the frequency at which the RU operates are the same or at least belong to an intra-band. That is, Scenario 2 can be applied to a situation where the time and/or frequency resources between the MT and the RU coincide, or the time and/or frequency resources of the MT and the RU partially overlap, or even if the time and/or frequency resources of the MT and the RU do not actually overlap, frequency bands are closely adjacent to each other so that an emission situation can exist as an adjacent band between the transmission of the MT and the reception of the RU (and/or between the transmission of the RU (or, NCR-Fwd) and the reception of the MT). Among the above-described situations, the following alternatives can be considered to indicate the DL reception beam of the RU. Alternatively, as described above, Scenario 2 can be applied to a case where transmission or reception for the control link and the transmission or reception for the backhaul link is not performed simultaneously.

For example, whether Scenario 2 to be described below is applied can be determined depending on whether time resources for the MT or the C-link and time resources for the RU or the backhaul link overlap. For example, when the time resources for the MT or the C-link and the time resources for the RU or the backhaul link do not overlap (and/or when there is no explicit instruction according to Scenario 1), the beam for the backhaul link can be determined according to the predefined rules described in Scenario 2.

Meanwhile, the alternatives to be described below may be based on the integrated TCI framework. That is, when the NCR determines the DL reception beam of the RU by the method to be described below, the NCR may determine that the UL transmission beam of the RU is changed to a UL transmission beam connected to the DL reception beam of the RU that has been agreed upon/defined/configured in advance, or the NCR may determine that beam change has been instructed. Alternatively, the NCR may determine that the UL transmission beam of the RU is changed to a UL transmission beam connected to the DL reception beam of the RU that has been agreed upon/defined/configured in advance, or the NCR may determine that beam change has been instructed. Here, connection between the DL reception beam and the UL transmission beam of the RU may be determined based on the joint TCI state of the NCR.

When the DL reception beam and the UL transmission beam of the RU are changed through the instruction of the joint TCI state, it may be considered that the application time of the joint TCI state and the application time of the indicated joint TCI state are configured by the predetermined agreement or promise. For example, the application time of the above joint TCI state may be located after a certain number of slots/symbols from the time point where the joint TCI state is indicated, or may correspond to the indicated time.

### (1) Alternative 1 - Based on predefined CSS

The (DL) reception beam of the RU may be predefined/configured/agreed to be aligned or correspond to the reception beam of the MT applied to receive the PDCCH in TypeO-PDCCH CSS. In other words, the DL reception beam of the RU for the backhaul link may correspond to the reception beam of the MT for receiving the signal used by the gNB for broadcasting system information.

With regard to the instruction of this DL reception beam (or the DL downlink reception beam of the RU), the gNB may also pre-agree/define/configure time offset information for the number of slots (or time offset) related to this instruction of the DL reception beam (or the time offset information may be transmitted together). For example, the DL reception beam of the RU may be changed to correspond to the specific beam direction of the MT from a specific time according to a predetermined promise or agreement. Alternatively, the beam change according to Alternative 1 of Scenario 2 may be applied to a time period other than the beam change and the instruction of the time offset according to the above scenario 1. For example, as described above, beam changing according to Alternative 1 of Scenario 2 may be defined as a default operation. Specifically, when a change to a first DL reception beam and a time offset of K slots are instructed together according to Scenario 1, the NCR may change the DL reception beam of the RU to the first DL reception beam based on the K-slots time, but may configure/change the DL reception beam of the RU according to Alternative 1 when the application of the first DL reception beam change according to Scenario 1 is terminated. Alternatively, the beam change according to Alternative 1 of Scenario 2 may be applied when there is no instruction for beam changing according to Scenario 1.

### (2) Alternative 2 - Predefined Search Space-based

In Alternative 2, the reception beam of the RU may be pre-agreed/defined/configured to correspond to a (DL) reception beam used by the MT for PDCCH reception in a specific search space (search space) among the reception beams of the MT. Here, the specific search space may be a search space corresponding to a search space ID indicated by the gNB.

Specifically, the reception beam of the RU may be pre-agreed/defined/configured to correspond to the reception beam of the MT for reception of a specific search space configuration that is not for the purpose of broadcasting system information. Alternatively, when the gNB transmits an MT-specific (or UE-specific) control signal that is not for the purpose of broadcasting system information, the reception beam of the RU may be predefined/agreed/configured to correspond to a reception beam that has is used by the MT to receive the control signal. As described above, since the search space ID for transmission of the MT-specific control signal is transmitted using the MT-specific BWP (or UE-specific BWP), it is necessary for the reception beam of the RU to specify/define which one of BWPs is related to the reception beam of the MT. For example, the reception beam of the RU may correspond to the reception beam of the MT in the search space related to a specific BWP of the MT (e.g., a default BWP or an initial BWP, etc.) according to the predetermined agreement or promise. Alternatively, the gNB may also indicate the search space ID for the MT corresponding to the reception beam of the RU and the ID of the corresponding BWP.

Meanwhile, the application time of the reception beam of the RU according to Alternative 2 of Scenario 2 may be determined based on a time offset defined/configured/agreed upon in advance, or may be a time period in which the beam change and time offset according to Scenario 1 are not applied. For example, as described above, the beam change according to Alternative 2 of Scenario 2 may be defined as a default operation. Specifically, when the beam change to the first DL reception beam and the time offset of K slots are instructed together according to Scenario 1, the NCR may change the DL reception beam of the RU to the first DL reception beam based on the K-slot time, but may configure/change the DL reception beam of the RU according to Alternative 2 when the application of the change of the first DL reception beam according to Scenario 1 is terminated. Alternatively, the beam change according to Alternative 2 of Scenario 2 may be applied when there is no instruction for the beam change according to Scenario 1.

Alternatively, with respect to the application of Alternative 2, if the gNB does not indicate a search space ID for the specific search space, the ID of the specific search space may be agreed upon/promised in advance. That is, the reception beam of the RU may be agreed upon/promised in advance to correspond to a reception beam to be used or applied by the MT in the specific search space agreed upon/promised in advance, even if there is no explicit instruction of the specific search space from the gNB. For example, the specific search space may be agreed upon/promised in advance as a search space having a lowest index, a highest index, or a middle index among the search spaces for the MT. In this case, the BWP related to the specific search space agreed upon/promised in advance may also be agreed upon/promised in advance as an active BWP, a default BWP, an initial BWP, or a BWP having a highest index (or a BWP having a lowest index).

### (3) Alternative 3 - Based on predefined CORESET

In Alternative 3, the reception beam of the RU can be pre-promised/defined/configured to correspond to the reception beam to be used by the MT for a specific CORESET among the reception beams of the MT. Here, the specific CORESET may be configured/determined by the CORESET ID indicated by the gNB. Alternatively, the specific CORESET may be promised/agreed/defined in advance.

Alternatively, unlike Alternative 1 and Alternative 2 described above, the gNB may indicate the reception beam of the MT by indicating the CORESET ID without indicating the specific search space to the MT. Since this CORESET is also BWP-specific, similar to Alternative 2, the CORESET may be a specific CORESET indicated for a specific BWP of the MT (e.g., default BWP or initial BWP, etc.) that has been agreed upon/promised in advance. Alternatively, the gNB may indicate the CORESET ID and BWP ID of the MT together (in relation to the reception beam of the RU).

Alternatively, information about the number of slots, which is time offset information, may also be indicated in the instruction of the DL reception beam. For example, if the gNB indicates the reception beam of the MT and K slots for the specific CORESET ID together, the gNB may expect that the RU's DL reception beam will be switched in the indicated direction from K slots based on the MT position after DL RS for the beam change is instructed. Alternatively, even if the time offset information for the number of slots is not indicated, the change of the indicated DL reception beam may be applied from a specific time according to the predetermined promise or agreement. This may mean that a specific operation is agreed upon as a default operation for the slot offset (i.e., included in the time offset information), and if the slot offset is not indicated, the default operation is performed, and if the slot offset is indicated, the indicated operation is performed. For example, if the slot offset is indicated, the indicated DL reception beam may be applied to the RU during a time period corresponding to the indicated slot offset from the promised time. For example, when the DL beam change of the RU and the K time-offset (K slots/K subframes/K symbols) are indicated, the DL reception beam of the RU is set to the indicated beam (or beam direction) during a time period corresponding to the K time-offset (K slots/K subframes/K symbols) from the promised time. After lapse of the time period, the DL reception beam of the RU may be set to the DL reception beam before such instruction or may be set to a default beam agreed upon in advance.

Alternatively, in relation to the application of Alternative 3, when the gNB does not indicate the specific CORESET ID, the specific CORESET ID may be promised /agreed upon in advance. That is, the reception beam of the RU may be pre-promised/agreed to correspond to the reception beam to be used or applied by the MT corresponding to the specific CORESET ID that has been explicitly promised/agreed upon in advance, even if there is no explicit instruction of the gNB for the specific CORESET ID. For example, the specific CORESET ID may be promised/agreed upon in advance as the lowest index, the highest index, or the middle index among the (configured) CORESET IDs for the MT. In this case, the BWP related to the specific CORESET ID that has been promised/agreed upon in advance may also be promised/agreed upon as the active BWP, the default BWP, the initial BWP, or the BWP with the highest index (or the BWP with the lowest index).

Alternatively, as described above, Alternative 3 may be applied when there is no overlap between the time resources for the control link and the time resources for the backhaul link (i.e., when transmission or reception in the control link and transmission or reception in the backhaul link are not performed simultaneously). In addition, the predefined rule according to Alternative 3 may be applied when there is no explicit instruction according to Scenario 1, or there is no capability to receive an explicit instruction according to Scenario 1. For example, when transmission or reception in the control link and transmission or reception in the backhaul link are not performed simultaneously and there is no explicit instruction according to Scenario 1, or when there is no capability to receive an explicit instruction according to Scenario 1, the beam for the backhaul link may be determined based on the CORESET with the lowest index among the CORESETs related to the control link according to Alternative 3. As described above, the beam for the backhaul link may be determined by considering the QCL related to the CORESET having the lowest index.

### (4) Alternative 4 - Based on TCI state ID

The RU's reception beam can be pre-promised/defined to correspond to the MT's reception beam to which the TCI state ID indicated by the gNB is applied.

Alternatively, information about the number of slots, which is time offset information, may also be indicated in the instruction of the DL reception beam. For example, if the gNB indicates the reception beam of the MT and K slots for the specific CORESET ID together, the gNB may expect that the RU's DL reception beam will be switched in the indicated direction from K slots based on the MT position after DL RS for the beam change is instructed. Alternatively, even if the time offset information for the number of slots is not indicated, the change of the indicated DL reception beam may be applied from a specific time according to the predetermined promise or agreement. This may mean that a specific operation is agreed upon as a default operation for the slot offset (i.e., included in the time offset information), and if the slot offset is not indicated, the default operation is performed, and if the slot offset is indicated, the indicated operation is performed. For example, if the slot offset is indicated, the indicated DL reception beam may be applied to the RU during a time period corresponding to the indicated slot offset from the promised time. For example, when the DL beam change of the RU and the K time-offset (K slots/K subframes/K symbols) are indicated together, the DL reception beam of the RU is set to the indicated beam (or beam direction) during a time period corresponding to the K time-offset (K slots/K subframes/K symbols) from the promised time. After lapse of the time period, the DL reception beam of the RU may be set to the DL reception beam before such instruction or may be set to a default beam agreed upon in advance.

Alternatively, in relation to Alternative 4, when the TCI state ID is not indicated from the gNB, the specific TCI state ID related to determination of the reception beam of the RU may be promised or defined in advance. For example, the specific TCI state ID may be promised/agreed upon in advance as the lowest index or the highest index among the (configured) TCI state IDs for the MT. In this case, the BWP related to the specific TCI state ID that has been promised/agreed upon in advance may also be promised/agreed upon as the active BWP, the default BWP, the initial BWP, or the BWP with the highest index (or the BWP with the lowest index).

Alternatively, as described above, Alternative 4 may be applied when there is no overlap between the time resources for the control link and the time resources for the backhaul link (i.e., when transmission or reception in the control link and transmission or reception in the backhaul link are not performed simultaneously). In addition, the predefined rule according to Alternative 4 may be applied when there is no explicit instruction according to Scenario 1, or there is no capability to receive an explicit instruction according to Scenario 1. For example, when transmission or reception in the control link and transmission or reception in the backhaul link are not performed simultaneously and there is no explicit instruction according to Scenario 1, or when there is no capability to receive an explicit instruction according to Scenario 1, the beam for the backhaul link may be determined by applying the integrated TCI used for the control link according to Alternative 4 to the DL and/or UL for the backhaul link.

### (5) Alternative 5 - Based on reception of side control information

In Alternative 5, the reception beam of the RU may be promised/defined/configured in advance to correspond to the reception beam to be used by the MT when side control information for controlling the backhaul link of the RU among the reception beams of the MT is used. In this case, the side control information may be transmitted via PDCCH in the search space for the MT, via PDSCH, or via both PDCCH and PDSCH. In relation to each case, the following Option 1, Option 2, and Option 3 may be considered.

### 1) Option 1: When the side control information is transmitted only via PDCCH within the search space

In this case, since the search space corresponds to the MT-specific search space, the proposed method of 'Alternative 2' described above may be used. However, since there are multiple search spaces to which such side control information is transmitted, it is necessary to clearly define whether Option 1 is applied to the case of transmitting the side control information for the certain search space (here, the case in which the search space ID is directly indicated may be the same as Alternative 2 described above). For example, the MT may assume that a change of the DL reception beam of the RU is indicated based on the side control information received in a specific search space predefined/agreed upon in advance. In this case, the NCR may determine the DL reception beam of the MT, that is applied to the specific search space to receive the side control information, to be the DL reception beam of the RU, or may assume that such determination is indicated by the gNB. For example, the specific search space may be a search space having the smallest or highest index among the search space IDs. Alternatively, the specific search space ID may be agreed upon/defined in advance as at least one ID among the multiple search space IDs for the MT. At this time, the specific search space may be limited to the BWP in which the MT receives side control information, may be configured for a designated specific BWP, or may be a search space of a specific BWP according to the predetermined agreement/promise. For example, the specific search space may be a default BWP or an initial BWP, or may mean a BWP with the lowest or highest BWP ID.

### 2) Option 2: When the side control information of the MT is transmitted only through the PDSCH

Option 2 may be an example case where the gNB instructs the MT to change the DL reception beam of the RU through the PDSCH. In this case, the gNB may expect that the DL reception beam of the RU will be changed to the beam where the MT has received the corresponding PDSCH.

### 3) Option 3: When the side control information of the MT is transmitted on both the PDCCH and the PDSCH in the search space

In Option 3, the DL reception beam of the RU may be configured by mixing the methods of Option 1 and Option 2. Specifically, the DL reception beam of the RU may be aligned with the beam of the search space in which the MT has received the side control information, or may be aligned with the reception beam of the MT of the PDSCH receiving the side control information. In this case, in a first case in which side control information is indicated as the search space and in a second r case in which side control information is indicated as PDSCH, there may be a difference in the change of the DL reception beam of the RU. For example, the timing point of changing the DL reception beam of the RU in the first case may be different from the timing point of changing the DL reception beam of the RU in the second case. For example, in the first case in which the side control information is indicated as the search space, the DL reception beam of the RU may be changed after lapse of a specific time offset that has been indicated (or promised in advance). In the second case in which the side control information is indicated as the PDSCH, the DL reception beam of the RU may be changed from a specific time that has been promised in advance (e.g., from a start time resource of the next subframe). Alternatively, when indicated as the search space, the DL reception beam of the RU may be changed only during a specific time resource that has been indicated (or promised in advance), and when indicated as the PDSCH, the RU DL reception beam may be changed from a specific time that has been promised in advance.

Alternatively, in Options 1 to 3, the reception beam of the RU has been described as a beam for receiving downlink (DL) data in the backhaul link, but as described above, it can be seen that not only a change in the DL reception beam for the backhaul link, but also a change in the UL reception beam for the backhaul link has been indicated. In other words, the method proposed in Options 1 to 5 can be interpreted as indicating a change of both the DL reception beam and the UL transmission beam of the RU. That is, there may be no independent beam report related to the beam of the RU, so that the beam of the RU can be aligned with the beam of the MT, and furthermore, the QCL relationship between the transmission/reception (Tx/Rx) beams of the MT can be equally applied to the transmission/reception (Tx/Rx) beams of the RU. For example, when the gNB instructs the MT to change the beam of the RU through the CORESET ID (and/or BWP ID), the DL reception beam of the RU may be aligned with the reception beam of the MT corresponding to the instructed CORESET ID (and/or BWP ID) and may be aligned with the transmission beam of the MT corresponding to the instructed CORESET ID (and/or BWP ID).

Alternatively, information about the number of slots, which is time offset information, may also be indicated in the instruction of the DL reception beam and the UL transmission beam of the RU. For example, when the gNB instructs the reception beam of the MT and the K slots together, the gNB may expect that the instruction directions of the RU's DL reception beam and the RU's UL transmission beam will be changed from K slots based on the MT position after such instruction has occurred. Alternatively, even if the time offset information for the number of slots is not indicated, the change of the indicated DL reception beam of the RU and the indicated UL transmission beam of the RU may be applied from a specific time according to the predetermined promise or agreement. This may mean that a specific operation is agreed upon as a default operation for the slot offset (i.e., included in the time offset information), and if the slot offset is not indicated, the default operation is performed, and if the slot offset is indicated, the indicated operation is performed. For example, if the slot offset is indicated, the indicated DL reception beam and the indicated DL transmission beam may be applied to the RU during a time period corresponding to the indicated slot offset from the promised time. For example, when the DL reception beam change of the RU, the UL transmission beam change of the RU, and the K time-offset (K slots/K subframes/K symbols) are indicated together, the DL reception beam of the RU and the UL transmission beam of the RU are set to the indicated beam (or beam direction) during a time period corresponding to the K time-offset (K slots/K subframes/K symbols) from the promised time. After lapse of the time period, the DL reception beam of the RU may be set to the DL reception beam of the RU before such instruction has occurred, and the UL transmission beam of the RU may be set to the UL transmission beam of the RU before such instruction has occurred, or may be set to a default beam agreed upon in advance.

Alternatively, separately from the instruction of the DL reception beam of the RU described above, the transmission beam direction of the MT applied when the MT transmits a specific signal/channel may be indicated as the UL transmission beam of the RU. That is, in order to indicate the change of the UL transmission beam of the RU, when the gNB indicates, to the MT, a specific RACH preamble or RACH occasion for the MT through the side control information, the UL transmission beam of the RU may be aligned with the UL transmission beam of the MT during transmission of the RACH preamble or the RACH occasion. Alternatively, in order to indicate the change of the UL transmission beam of the RU, when the gNB indicates, to the MT, a specific SRI for the MT through the side control information, the UL transmission beam of the RU may be aligned with the UL transmission beam of the MT in which SRS corresponding to the specific SRI has been used or applied.

### 3. Scenario 3 - Based on Beam currently applied to MT

With respect to Scenario 3, the gNB may expect that the currently applied transmission/reception (Tx/Rx) beams of the MT and the transmission/reception (Tx/Rx) beams of the RU (or, NCR-Fwd) are aligned, or may instruct that the transmission/reception (Tx/Rx) beams of the MT and the transmission/reception (Tx/Rx) beams of the RU are aligned. In this case, the gNB may expect that the transmission/reception (Tx/Rx) beams of the MT in the most recent slot (or symbol) where the MT has performed data transmission/reception before the (n-k)-th slot is started will be aligned with the transmission/reception (Tx/Rx) beams of the RU in the N-th slot. Here, the time offset of K may be defined on a slot basis or a symbol basis. Scenario 3 may also be applied to the application after the change instruction of the transmission/reception (Tx/Rx) beam of the RU in Scenario 1 or Scenario 2. That is, when the change of the transmission/reception (Tx/Rx) beams of the RU is explicitly/implicitly instructed by the side control information, the gNB may expect that the transmission/reception (Tx/Rx) beams of the indicated RU will be applied within a specific time period.

Alternatively, the gNB may expect that the beam corresponding to the most recently instructed TCI state ID of the MT and the DL reception beam (and/or the UL transmission beam) of the RU will be aligned. That is, the NCR may determine that the change of the DL reception beam of the RU is instructed to be changed to a beam corresponding to the most recent TCI state ID instructed to the MT. Here, the most recent TCI state ID instructed to the MT may mean a TCI state ID configured to schedule a PDCCH and/or a PDSCH.

In addition, the latest TCI state ID instructed to either the NCR or the MT may be defined as follows.
1) First, the latest TCI state ID may mean a TCI state ID that has been successfully received by the NCR or the MT. That is, the latest TCI state ID may mean a TCI state ID of a PDSCH that has been instructed from the gNB by the NCR or the MT gNB. Alternatively, the latest TCI state ID may mean the TCI ID of the PDCCH most recently monitored by the NCR or the MT, or the TCI ID of the PDCCH detected by the NCR or the MT.

That is, when the gNB instructs the NCR or the MT to receive the PDCCH (or PDSCH) (i.e., to schedule the PDCCH (or PDSCH)), the gNB may expect that the DL reception beam (and/or UL transmission beam) of the RU will be aligned with the beam of the MT corresponding to the TCI state ID (or an integrated TCI state ID) scheduled for the PDCCH (or PDSCH) to the MT. In this case, the MT may inform the gNB of reception of information about the PDSCH (or PDCCH) scheduling through HARQ feedback.

Alternatively, since the gNB cannot clearly recognize whether the scheduling signal of the PDSCH (or PDCCH) including the TCI state ID has been received by the MT, the gNB may perform an operation according to the predetermined agreement/promise in association with the reception of the scheduling signal, which will be described later. For example, the NCR or the MT may change the DL reception beam (and/or UL transmission beam) of the RU according to the TCI state ID of the recently scheduled PDSCH (or PDCCH), or may change the DL reception beam (and/or UL transmission beam) of the RU according to the TCI state ID of the recently monitored (or detected) PDCCH. In this case, the time point at which the DL reception beam (and/or UL transmission beam) of the RU is changed according to the TCI state ID may be the time point at which the NCR or the MT transmits a HARQ signal for the PDSCH or PDCCH scheduled by the scheduling signal to the gNB or may be located after this transmission point. Alternatively, without such a procedure of the HARQ feedback, it may be determined that the NCR or the MT will always receive the PDSCH (or PDCCH) including the TCI state ID. In this case, the NCR or the MT may change the beam of the RU to a beam corresponding to the TCI state ID within a specific time after reception (or detection, monitoring) of the PDSCH (or PDCCH) or may change the beam of the RU to a beam corresponding to the TCI state ID after lapse of a specific time after reception (or detection, monitoring) of the PDSCH (or PDCCH).

In addition, as described above, the method of Scenario 3 may be applied when the time resources between the backhaul link and the control link overlap (i.e., when transmission or reception in the control link and transmission or reception on the backhaul link are performed simultaneously).

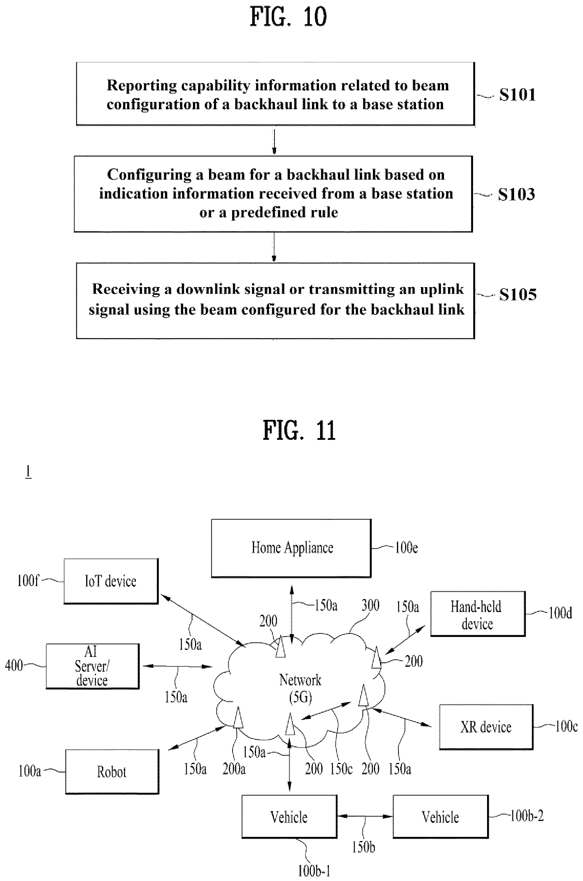

FIG. 10 is a diagram illustrating a method in which the NCR configures a beam for the backhaul link required for forwarding.

Referring to FIG. 10, the NCR may report capability information related to beam configuration of the backhaul link to the gNB (base station: BS) (S101). Here, the capability information may be capability information on whether or not an instruction for the beam of the backhaul link is possible. That is, the NCR may report, to the gNB, capability information indicating that a beam for the backhaul link is instructed, or may report, to the gNB, the capability information indicating that instruction of the beam for the backhaul link is not supported. Meanwhile, whether or not an instruction for the beam of the backhaul link is possible may be related to whether different beams can be configured between the backhaul link and the control link (i.e., the link between the MT of the NCT and the gNB) as described above. For example, if different beams can be configured between the backhaul link and the control link, the NCR has the capability to receive an explicit instruction for the beam for the backhaul link as described above. Meanwhile, the beam for the backhaul link may correspond to the DL reception beam/UL transmission beam of the RU as described above, and the beam for the control link may correspond to the DL reception beam/UL transmission beam of the MT as described above.

Next, the NCR may configure/determine the beam for the backhaul link based on the instruction information received from the gNB (base station) according to the report of the capability information, or may configure/determine the beam for the backhaul link based on a predefined rule (S103). For example, if the capability information includes information that instruction of the beam for the backhaul link is possible, the NCR may receive the instruction information from the gNB (base station) through the control link, and may determine/configure the beam indicated by the instruction information among a plurality of beams related to the control link as a beam for the backhaul link. In contrast, if the capability information includes information indicating that the beam for the backhaul link cannot be instructed, the NCR may determine the beam for the backhaul link based on the predefined rule without expecting reception of the instruction information. Here, the above instruction information may be transmitted to the NCR via MAC CE (MAC Control Elements) as described above.

Specifically, when the capability information indicating that beam instruction for the backhaul link is possible is reported, the NCR can expect that the instruction information will be received from the gNB (or BS). When the instruction information is received, the NCR may determine a beam for the backhaul link based on the instruction information. Here, the instruction information may include information indicating at least one of the plurality of beams related to the control link. For example, the instruction information may include information on a TCI state ID related to the control link indicating at least one beam among a plurality of beams configured (via RRC signaling) for the control link. In this case, the NCR may recognize at least one beam among the plurality of beams for the control link as the beam for the backhaul link through the TCI state ID included in the instruction information. That is, the at least one beam may be instructed by the NCR as the beam for the backhaul link. In other words, the NCR may configure/determine a beam for the backhaul link (or a DL reception beam for the backhaul link) as a beam corresponding to the TCI state ID among the plurality of beams for the control link based on the instruction information. Alternatively, the instruction information may include an SRI for the control link, and the NCR may be instructed, through the SRI included in the instruction information, to select a beam (e.g., a UL transmission beam) to be used for the backhaul link among a plurality of beams for the control link.

Alternatively, the instruction information may include information on the SSB index, and the CSI-RS index (related to the control link) indicating one of the plurality of beams configured for the control link as described above. That is, the NCR may receive an explicit instruction indicating the beam for the backhaul link according to Scenario 1. Meanwhile, as described above, the NCR may receive an instruction indicating the DL reception beam and/or the UL transmission beam for the backhaul link based on the instruction information.

Alternatively, if capability information including information indicating that beam instruction for the backhaul link is not possible is reported, or if capability information is not reported because beam instruction for the backhaul link is not possible, the NCR may configure/determine the beam for the backhaul link according to a predefined rule. Here, the predefined rule is as described above in the above-described Scenario 2 and/or Scenario 3. For example, the NCR may determine/configure the beam for the backhaul link, based on a specific CORESET among a plurality of CORESETs related to the control link (or configured for the control link), a specific search space among a plurality of search spaces related to the control link (or configured for the control link), a joint TCI state for the control link, and a reception state of side control information for controlling the backhaul link according to the predefined rule. For example, the NCR may determine a beam for the backhaul link based on a CORESET having a lowest ID among the CORESETs configured for the control link according to the predefined rule. In this case, the NCR may determine the beam for the backhaul link by using QCL estimation for the control link related to the CORESET having the lowest ID as described above. Alternatively, the NCR may determine a beam direction for the backhaul link based on the integrated TCI state instructed for the control link according to the predefined rule.

Alternatively, even if the capability information is reported, if the instruction information is not received, or if the time resource for the backhaul link and the time resource for the control link do not overlap (i.e., if the MT does not perform transmission or reception at a specific time resource at which transmission or reception is to be performed on the backhaul link as described above), the NCR may configure/determine the beam for the backhaul link according to the predefined rule.

Alternatively, if the time resource for the backhaul link and the time resource for the control link overlap (i.e., if the MT performs transmission or reception at a specific time resource at which transmission or reception is to be performed on the backhaul link as described above), the NCR may configure/determine the beam for the backhaul link as the same beam as the beam to be applied to the control link.

Next, the NCR may receive a downlink (DL) signal of the gNB (or BS) through the backhaul link or transmit an uplink (UL) signal to the gNB (BS) through the backhaul link using the beam for the backhaul link that is configured/determined based on the predefined rule or the instruction information (S105).

In this way, the NCR may report the capability information indicating whether the beam instruction for the backhaul link required for forwarding is possible, so that the NCR may clearly determine whether to determine the beam for the backhaul link by the instruction information of the beam for the backhaul link received from the gNB, or may clearly determine whether to determine the beam for the backhaul link by the predefined rule without using the instruction information. In addition, even if the beam instruction for the backhaul link is not expected through the instruction information of the gNB (base station) according to the report of the capability information or even if the instruction information is not received, the beam configuration/determination of the backhaul link that can be clearly predicted between the gNB and the NCR can be possible through the predefined rule.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 11 illustrates a communication system applied to the present disclosure.

Referring to FIG. 11, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

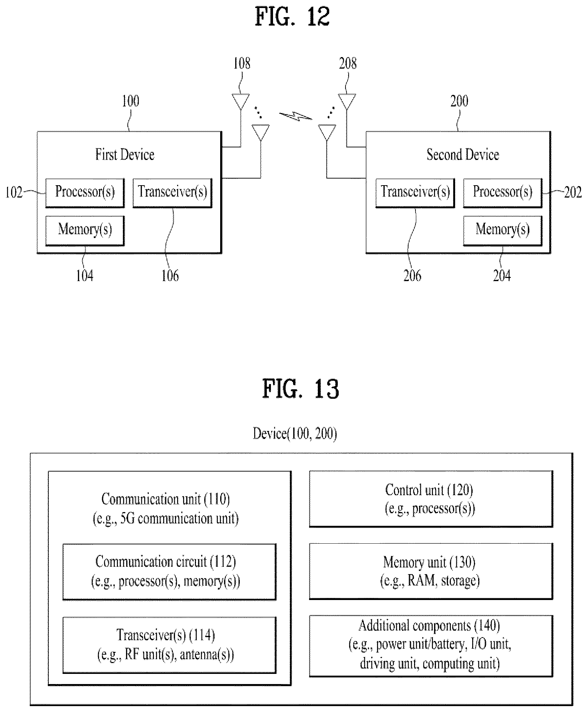

FIG. 12 illustrates a wireless device applicable to the present disclosure.

Referring to FIG. 12, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to one example, the first wireless device 100 or the NCR may include a processor 102 and a memory 104 connected to the RF transceiver. The memory 104 may include at least one program capable of performing operations related to the embodiments described with reference to FIGS. 9 and 10.

Specifically, the processor 102 may control the RF transceiver 106 to report capability information related to beam configuration g of the backhaul link to the gNB (or BS) through the control link, and may configure, based on the report of the capability information, the beam for the backhaul link according to either the instruction information received from the gNB or the predefined rule. Here, the instruction information may include a transmission configuration indicator (TCI) state or a scheduling request indicator (SRI) related to the control link required to configure the beam for the backhaul link.

Alternatively, the processor 102 and the memory 104 may be included in a chipset. In this case, the chipset may include at least one processor and at least one memory operatively connected to the at least one processor and configured to, when executed, cause the at least one processor to perform an operation. Here, the operation may include reporting capability information related to beam configuration of the backhaul link to a base station via the control link; and configuring, based on the report of the capability information, a beam for the backhaul link according to instruction information received from the base station or a predefined rule, wherein the instruction information may include a TCI state or SRI related to the control link for configuring the beam for the backhaul link. Furthermore, the at least one processor may perform operations for the embodiments described in FIGS. 9 and 10 based on a program included in the memory.

Alternatively, a computer readable storage medium including at least one computer program for causing the at least one processor to perform an operation may be provided. Here, the operation may include reporting capability information related to beam configuration of the backhaul link to a base station via the control link; and configuring, based on the report of the capability information, a beam for the backhaul link according to instruction information received from the base station or a predefined rule, wherein the instruction information may include a TCI state or SRI related to the control link for configuring the beam for the backhaul link. Furthermore, the at least one processor may perform operations for the embodiments described in FIGS. 9 and 10 based on a program included in the memory. In addition, the computer program may include programs that can perform operations for the embodiments described with reference to FIGS. 9 and 10.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of application of wireless devices to which the present disclosure is applied

FIG. 13 illustrates another example of a wireless device applied to the present disclosure.

Referring to FIG. 13, wireless devices 100 and 200 may correspond to the wireless devices 100 and 200 of FIG. 12 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 12. For example, the transceiver(s) 114 may include the one or more transceivers 106 and 206 and/or the one or more antennas 108 and 208 of FIG. 12. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 11), the vehicles (100b-1 and 100b-2 of FIG. 11), the XR device (100c of FIG. 11), the handheld device (100d of FIG. 11), the home appliance (100e of FIG. 11), the IoT device (100f of FIG. 11), a digital broadcast terminal, a hologram device, a public safety device, an MTC device, a medicine device, a fintech device (or a finance device), a security device, a climate/environment device, the AI server/device (400 of FIG. 11), the BSs (200 of FIG. 11), a network node, etc. The wireless device may be used in a mobile or fixed place according to a use-example/service.

In FIG. 13, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. In another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### [Industrial Applicability]

The above-described embodiments of the present disclosure are applicable to various mobile communication systems.

## Claims

1. A method for setting a beam for a backhaul link for forwarding by an NCR (network-controlled repeater) in a wireless communication system, the method comprising:
reporting capability information related to beam setting of the backhaul link to a base station through the control link; and
configuring a beam for the backhaul link based on indication information received from the base station or a predefined rule based on the report of the capability information,
wherein the indication information includes a TCI (Transmission Configuration Indicator) state ID (identifier) or a SRI (scheduling request indicator) related to the control link for configuring the beam for the backhaul link.

2. The method according to claim 1, wherein the capability information includes information related to whether the beam for the backhaul link can be indicated.

3. The method according to claim 1, wherein the capability information includes information on whether the beam different from the beam for the control link can be used for the backhaul link.

4. The method according to claim 1, wherein a downlink reception beam for the backhaul link is configured to the beam corresponding to the TCI state ID included in the indication information among a plurality of beams for the control link based on the reception of the indication information through the report of the capability information, and
wherein an uplink transmission beam for the backhaul link is configured to the beam corresponding to the SRI included in the indication information among a plurality of beams for the control link.

5. The method according to claim 1, wherein, based on a time resource for the backhaul link that does not overlap with a time resource for the control link and the indication information being not received, the beam for the backhaul link is configured based on the predefined rule.

6. The method according to claim 5, wherein a downlink reception beam for the backhaul link is determined based on a CORESET (control resource set) of a specific index among the CORESETs related to the control link according to the predefined rule.

7. The method according to claim 6, wherein the specific index is the lowest index among the indices for the CORESETs.

8. The method according to claim 5, wherein a downlink reception beam for the backhaul link is determined as the beam for the control link used to receive a downlink signal in a specific search space among a plurality of search spaces related to the control link based on the predefined rule.

9. The method according to claim 5, wherein the beam for the backhaul link is determined as the same beam as the beam for the control link based on a predefined rule.

10. An NCR (network-controlled repeater) for configuring a beam for a backhaul link for forwarding in a wireless communication system, comprising:
An RF (Radio Frequency) transceiver; and
A processor connected to the RF transceiver,
wherein the processor controls the RF transceiver to report capability information related to the beam configuring of the backhaul link to a base station through the control link, and configure the beam for the backhaul link based on indication information received from the base station or a predefined rule, based on the report of the capability information,
wherein the indication information includes a TCI (Transmission Configuration Indicator) state or a SRI (scheduling request indicator) related to the control link for configuring a beam for the backhaul link.

11. The NCR according to claim 10, wherein the capability information includes information related to whether or not the beam for the backhaul link can be configured based on the indication information.

12. The NCR according to claim 10, wherein a downlink reception beam for the backhaul link is configured to the beam corresponding to the TCI state ID included in the indication information among a plurality of beams for the control link based on the reception of the indication information through the report of the capability information.

13. The NCR according to claim 10, wherein based on a time resource for the backhaul link that does not overlap with a time resource for the control link and the indication information being not received, the beam for the backhaul link is configured based on the predefined rule.

14. A chipset for configuring a beam for a backhaul link for forwarding in a wireless communication system,
At least one processor; and
at least one memory operably connected to the at least one processor, and when executed, causing the at least one processor to perform an operation,
wherein the operation comprises:
reporting capability information related to the configuration of the beam of the backhaul link to a base station through the control link, and
based on the reporting of the capability information, configuring the beam for the backhaul link based on indication information received from the base station or a predefined rule,
wherein the indication information includes a TCI (Transmission Configuration Indicator) state or a SRI (scheduling request indicator) related to the control link for configuring a beam for the backhaul link.

15. A computer-readable storage medium including at least one computer program in a wireless communication system,
wherein the at least one computer program is configured to cause at least one processor to perform the operations for configuring a beam for a backhaul link for forwarding in the wireless communication system,
wherein the at least one computer program is stored on the computer-readable storage medium, and
wherein the operations comprise:
reporting capability information related to the configuration of the beam of the backhaul link to a base station through the control link, and
based on the reporting of the capability information, configuring the beam for the backhaul link based on indication information received from the base station or a predefined rule,
wherein the indication information includes a TCI (Transmission Configuration Indicator) state or a SRI (scheduling request indicator) related to the control link for configuring a beam for the backhaul link.
